**Europäisches Patentamt**

**European Patent Office**

**Office européen des brevets**

(11) Numéro de publication: **0 275 743 B1**

(12) **FASCICULE DE BREVET EUROPEEN**

(45) Date de publication de fascicule du brevet: **18.03.92**  (51) Int. Cl.5: **H04J 3/16, H04Q 11/04**

(21) Numéro de dépôt: **87402829.3**

(22) Date de dépôt: **11.12.87**

(54) **Equipements de multiplexage et démultiplexage numériques de paquets de longueurs différentes.**

(30) Priorité: **15.12.86 FR 8617499**

(43) Date de publication de la demande:
**27.07.88 Bulletin 88/30**

(45) Mention de la délivrance du brevet:
**18.03.92 Bulletin 92/12**

(84) Etats contractants désignés:
**DE GB IT NL SE**

(56) Documents cités:
**EP-A- 0 178 137**

**PROCEEDINGS OF THE INTERNATIONAL SWITCHING SYMPOSIUM, TELECOMMUNICATION SWITCHING, Florence, 7-11 mai 1984, part 1, session 21B, papier 3, pages 1-6, North-Holland, Amsterdam, NL; G. RIBBECK et al.: "EWSD as a basis for ISDN"**

**PROCEEDINGS OF THE SEVENTH INTERNATIONAL CONFERENCE ON COMPUTER COMMUNICATION, Sydney, 30th October - 2nd November 1984, pages 643-648, ICCC, Elsevier Science Publishers B.V. (North-Holland), Amsterdam, NL; G. LEIJONHUFVUD et al.: "Implementation of packet switching in ISDN"**

(73) Titulaire: **ETAT FRANCAIS représenté par le Ministre des PTT (Centre National d'Etudes des Télécommunications)
38-40 rue du Général Leclerc
F-92131 Issy-les-Moulineaux(FR)**

(72) Inventeur: **Slawy, Serge
Le Houenach
F-22310 Plestin les Grèves(FR)**
Inventeur: **Soto Sumuano, Jésus Léonard
Rio Omotepec 1074 Col. Popular
M-80120 Cumiacan Sinaloa(MX)**
Inventeur: **Desmarest, Jacques Lucien
7, Allée des Roses
F-22700 Louannec(FR)**

(74) Mandataire: **Cabinet Martinet & Lapoux
BP 405
F-78055 Saint Ouentin en Yvelines
Cédex(FR)**

Rank Xerox (UK) Business Services

# Description

La présente invention concerne un équipement de multiplexage recevant des paquets, dites trames HDLC, ayant des longueurs différentes et convoyés par des canaux numériques ayant un débit faible pour retransmettre en série les paquets reçus dans une unique voie numérique sortant ayant un débit élevé. L'invention concerne également un équipement de démultiplexage recevant des paquets ayant des longueurs différentes et convoyés par une unique voie numérique entrante ayant le débit élevé pour retransmettre les paquets dans des canaux sortants destinataires ayant le débit faible.

Il est à noter, dès maintenant, que l'invention a trait à des paquets ayant des longueurs différentes et à des opérations de multiplexage et démultiplexage ne modifiant pas le contenu et donc la longueur de chaque paquet ; un paquet transmis dans un canal entrant respectif ou dans la voie de paquet entrante est retransmis intégralement dans la voie de paquet sortante ou dans un canal sortant respectif. Par ailleurs, les débits des canaux et des voies sont constants.

Les équipements de multiplexage et démultiplexage selon l'invention et définis ci-dessus, sont destinés à raccorder dans un commutateur numérique pour réseau numérique à intégration de services (RNIS) des lignes d'abonné numériques bidirectionnelles constituées chacune par un canal entrant et un canal sortant à une unité spécialisée de traitement de paquets constituant une interface entre les lignes d'abonné et le réseau.

Actuellement, une unité de traitement ne peut traiter, à l'aide d'un microprocesseur, les paquets relatifs qu'à au plus deux lignes numériques d'abonné auxquelles elle est directement reliée. Sachant que le trafic dans ces lignes est relativement faible et que l'unité de traitement est capable de gérer un grand nombre de paquets d'une même ligne, il en résulte que le coût de raccordement d'une ligne d'abonné au réseau est très élevé, coût dû en particulier à celui de l'unité de traitement.

La présente invention vise à pallier l'inconvénient précité en mettant à profit d'une part, que le trafic des informations dans les lignes d'abonné demeure relativement faible, en pratique de l'ordre de quelques paquets par seconde seulement, et d'autre part, qu'une unité de traitement de paquets est largement sous-utilisée selon la technique antérieure et est capable de traiter un nombre élevé de paquets dans la mesure où ceux-ci sont transmis en série dans une même voie numérique à l'unité de traitement. L'invention a ainsi pour but de fournir des équipements de multiplexage et démultiplexage de paquets permettant de relier des lignes numériques d'abonné en nombre élevé, supérieur à deux, à une unique unité de traitement de paquets.

A cette fin, un équipement de multiplexage relié à une pluralité de canaux numériques entrants ayant un même débit faible convoyant chacun des paquets de longueurs différentes pour retransmettre en série les paquets dans une voie numérique sortante, est caractérisé en ce qu'il comprend des moyens pour multiplexer à division du temps les canaux entrants par groupe de bits en nombre prédéterminé dans des intervalles de temps de trames d'une voie multiplex ayant un débit élevé, et des moyens pour regrouper consécutivement les groupes de bits de chaque paquet transmis par la voie multiplex en vue de transmettre en série les paquets regroupés dans la voie sortant selon l'ordre chronologique des paquets transmis dans la voie multiplex ; et un équipement de démultiplexage relié à une voie numérique entrante convoyant en série des paquets de longueurs différentes destinés respectivement à des canaux numériques sortants ayant un même débit faible pour retransmettre les paquets respectivement dans les canaux sortants, est caractérisé en ce qu'il comprend des moyens pour séparer les paquets dans la voie entrante en fonction de leur destination afin de délivrer les paquets destinés aux canaux sous la forme de groupes ayant des bits en nombre prédéterminé respectivement pendant des intervalles de temps de trames d'une voie multiplex ayant un débit élevé et des moyens pour démultiplexer à division du temps la voie multiplex en lesdits canaux sortants.

Selon l'invention, dans l'équipement de multiplexage, les moyens pour multiplexer sont classiques et permettent de transmettre dans une voie multiplex unique, les paquets provenant des différents canaux entrants. La seconde condition imposée par le raccordement à l'unité de traitement de paquets, à savoir la mise en série des paquets, est réalisée à l'aide des moyens pour regrouper, et plus précisément à l'aide de moyens pour mémoriser inclus dans les moyens pour regrouper et comportant autant de sous-mémoires que de canaux entrants afin de retransmettre en série les paquets complets des canaux dans la voie sortante au fur et à l'invention, les moyens pour regrouper comprennent des premiers moyens reliés à la voie multiplex pour détecter les débuts et les fins des paquets transmis dans les canaux entrants multiplexés dans la voie multiplex, des moyens pour mémoriser les données des canaux entrants transmis par la voie multiplex, des moyens synchrones avec la fréquence de bit de la voie multiplex pour écrire systématiquement les données des canaux entrants dans les moyens pour mémoriser au fur et à mesure de leur transmission dans la voie multiplex, et des moyens synchrones avec la fréquence de bit de la voie sortant pour lire sélectivement chaque paquet regroupé parmi les données écrites dans les moyens pour mémoriser en fonction des début et fin détectés du paquet regroupé, afin de transmettre en série le paquet regroupé lu dans la voie sortant.

Par analogie, les moyens pour séparer dans l'équipement de démultiplexage effectuent des opérations réciproques à celles des moyens pour regrouper. Selon une autre caractéristique de l'invention, les moyens pour séparer comprennent des premiers moyens reliés à la voie entrante pour détecter les débuts et les fins des paquets transmis dans la voie entrante, des moyens pour mémoriser au moins les paquets transmis par la voie entrante, des moyens synchrones avec la fréquence de bit de la voie entrante pour écrire les paquets dans les moyens pour mémoriser au fur et à mesure de leur transmission par la voie entrante, et des moyens synchrones avec la fréquence de bit de la voie multiplex pour lire systématiquement les moyens pour mémoriser à raison d'un groupe de bits d'un paquet écrit, pendant l'intervalle de temps respectif de la voie multiplex.

Ainsi, selon l'invention, les équipements de multiplexage et démultiplexage ne traitent pas les paquets en fonction des informations proprement dites qu'ils contiennent, mais uniquement en dépendance d'une part, de leur origine et destination indiquées par des adresses de canal résultant directement des multiplexages numériques du type MIC dans les voies multiplex des deux équipements, d'autre part, de leur longueur qui est, selon l'invention, signalée pour chaque paquet, aussi bien dans les canaux entrants que dans la voie de paquet entrante par des drapeaux d'ouverture et de fermeture normalisés encadrant le paquet. Le premier bit "O" du drapeau d'ouverture et le dernier bit "O" du drapeau de fermeture sont détectés pour indiquer le début et la fin du paquet de manière à regrouper les groupes de bits d'un paquet dans la voie multiplex en un paquet dans la voie sortante pour l'équipement de multiplexage, et à séparer les paquets des canaux dans la voie entrante et à diviser chaque paquet séparé en des groupes de bits multiplexés chacun avec des groupes de bits des autres canaux sortants dans la voie multiplex pour l'équipement de démultiplexage.

D'autres avantages et caractéristiques de l'invention apparaîtront plus clairement à la lecture de la description suivante de plusieurs réalisations préférées de l'invention en référence aux dessins annexés correspondants dans lesquels :

- la Fig.1 est un bloc-diagramme schématique d'équipements de multiplexage et démultiplexage selon l'invention ;
- la Fig.2 montre des paquets transmis dans un canal à débit faible entrant dans l'équipement de multiplexage, ou sortant de l'équipement de démultiplexage , et répartis en groupe de bits dans une voie multiplex ;
- la Fig.3 montre des paquets de canaux multiplexés dans une voie de paquet à débit élevé sortant de l'équipement de multiplexage ou entrant dans l'équipement de démultiplexage ;
- la Fig.4 est un bloc-diagramme d'une base de temps commune aux équipements de multiplexage et démultiplexage :
- la Fig.5 est un bloc-diagramme d'un circuit de détection de début et fin de paquet entrant inclus dans un multiplexeur de paquets de l'équipement de multiplexage ;
- la Fig.6 est un bloc-diagramme d'un circuit de gestion et stockage des paquets des canaux entrants inclus dans le multiplexeur de paquets ; et
- la Fig.7 est un bloc-diagramme d'un circuit de gestion et stockage de paquets inclus dans un démultiplexeur de paquets de l'équipement de multiplexage.

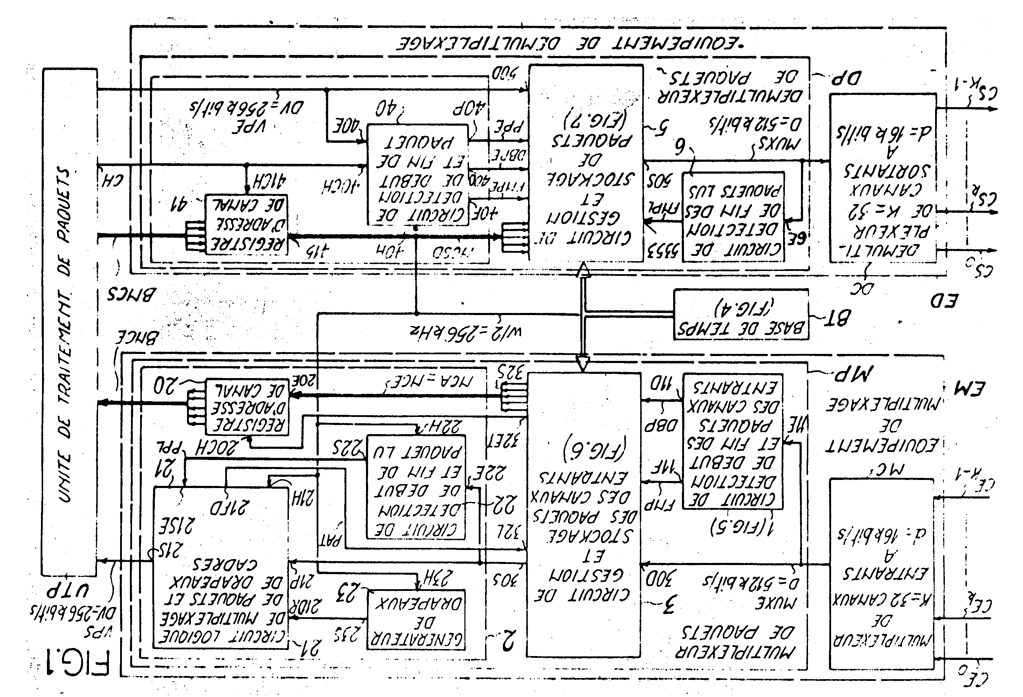

Comme montré schématiquement à la Fig.1, un équipement de multiplexage EM selon l'invention comprend principalement un multiplexeur de canaux numériques MC et un multiplexeur de paquets MP.

Le multiplexeur MC reçoit en parallèle K canaux numériques entrants $CE_0$ à $CE_{K-1}$ ayant un même débit faible prédéterminé d et transmettant chacun des paquets de données ayant des longueurs différentes a priori ; les paquets dans un même canal sont espacés par des intervalles de "silence", c'est-à-dire des intervalles vides de donnés, a priori de longueurs quelconques. Les canaux $CE_0$ à $CE_{K-1}$ sont multiplexés à division du temps dans le multiplexeur MC, d'une manière classique, par groupes de 8 bits, c'est-à-dire octet par octet, dans une voie multiplex intermédiaire MUXE entrant dans le multiplexeur MP. La voie MUXE est une voie MIC classique ayant un débit élevé D = d x K et offrant une trame récurrente ayant K intervalles temporels consécutifs $IT_0$ à $IT_{K-1}$ occupés respectivement par des groupes de 8 bits des canaux entrants $CE_0$ à $CE_{K-1}$.

Le multiplexeur de paquets MP détecte chacun des paquets délivrés par les canaux $CF_0$ à $CF_{K-1}$ et transmis par la voie MUXE, et en particulier, détecte le début et la fin de chaque paquet afin de regrouper consécutivement les groupes de 8 bits, dits octets, dans chaque canal, et plus particulièrement dans chaque paquet, dans une mémoire tampon de stockage. Chaque paquet ainsi reconstitué est retransmis en série dans une voie de paquet unique sortante VPS ayant un débit DV égal ou inférieur au débit D. Les paquets sont ainsi transmis en série dans la voie VPS au fur et à mesure de leur arrivée dans l'équipement de multiplexage EM et par ordre croissant des indices formant adresses de canal, 0 à K-1, des canaux $CE_0$ à $CF_{K-1}$ lorsque des paquets arrivent en même temps.

Un équipement de démultiplexage ED selon l'invention effectue essentiellement deux opérations réciproques de celles accomplies par l'équipement de multiplexage EM. Une première opération effectuée dans un démultiplexeur de paquets DP consiste à démultiplexer des paquets de données transmis par une voie de paquet unique entrante VPE au débit $DV \le D$ et assignés à des canaux numériques sortants $CS_0$ à $CS_{K-1}$ au débit d, de manière à séparer les paquets dans la voie VPE en fonction de leur destination $CS_0$ à $CS_{K-1}$ et retransmettre des groupes de 8 bits ou octets de chaque paquet dans l'intervalle de temps respectif $IT_0$ à $IT_{K-1}$ de trames d'une voie multiplex intermédiaire sortante MUXS du type MIC ayant le débit D. Une seconde opérations consiste à démultiplexer la voie MUXS en les canaux $CS_0$ à $CS_{K-1}$ d'une manière classique, dans un démultiplexeur de canaux DC.

Par ailleurs, les équipements EM et ED comprennent en commun une base temps générale BT destinée à produire différents signaux d'horloge à partir d'une horloge maîtresse stable ayant une fréquence, par exemple égale à 2w, multiple entière de la fréquence de bit w dans les voies multiplex au débit élevé D.

Afin de fixer des idées, l'équipement de multiplexage EM, puis l'équipement de démultiplexage DP sont décrits en référence à une réalisation pratique dans laquelle les canaux entrants et sortants sont au nombre de 32, $CE_0$ à $CE_{31}$ et $CS_0$ à $CS_{31}$, ont un débit faible de d = 16 kbit/s, et constituent K = 32 lignes numériques bidirectionnelles d'abonné desservant des installations télématiques d'abonné dans le cadre d'un réseau numérique à intégration de services (RNIS). Le trafic de données dans de telles voies est relativement faible, c'est-à-dire les intervalles de silence sont prépondérants dans chaque canal, et seulement un petit nombre statistiquement faible de canaux convoient en même temps des paquets.

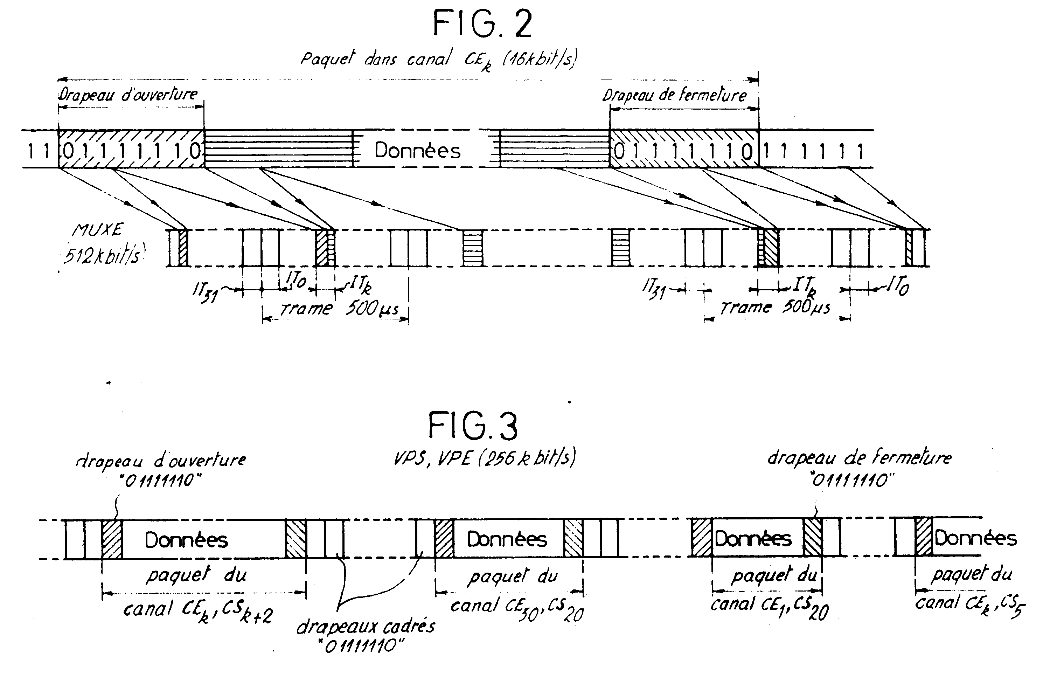

Chaque paquet est constitué par une trame HDLC (de l'américain "High Level Data Link Control") normalisée selon l'avis X25 du CCITT (Comité Consultatif International Télégraphique et Téléphonique), livre jaune, fascicule VIII.2, Novembre 1980. Il est à noter que la signification des données contenues dans les paquets importe peu pour l'invention, le début et la fin de chaque paquet étant seuls d'intérêt pour multiplexer les paquets selon l'invention ; à ce sujet, il convient également de remarquer qu'un groupe de 8 bits ou octet de données multiplexé dans le multiplexeur MC ne constitue pas, a priori, un octet supportant une information significative au sens propre du terme, et est déterminé uniquement par un groupement de huit bits d'un canal accompli par la base de temps, sans une quelconque considération de l'information contenue dans les paquets. Un paquet comprend un nombre quelconque de bits de données, qui n'est pas obligatoirement un nombre multiple entier de huit. Selon la réalisation pratique, un paquet transmis dans un canal $CE_0$ à $CE_{31}$, $CS_0$ à $CS_{31}$ est toujours accompagné d'un drapeau d'ouverture précédant le paquet, et d'un drapeau de fermeture succédant au paquet, comme montré à la Fig.2. La présence de ces deux drapeaux facilite la détection des paquets, comme on le verra par la suite. Un drapeau est un octet de valeur 7E en code hexadécimal, soit la séquence de bits "01111110". Comme il est connu, un paquet transmis ne contient pas de séquence ayant plus de cinq bits "1" consécutifs, c'est-à-dire pour toutes séquences de données à transmettre comportant plus de cinq bits "1", un bit de bourrage "0" est inséré après une séquence de cinq bits "1" afin de s'assurer qu'un drapeau n'est pas simulé dans un paquet. En réception, le contenu du paquet est examiné afin d'éliminer tout bit "0" qui suit immédiatement cinq bits "1" consécutifs. En outre, selon la réalisation pratique, chaque intervalle de silence entre drapeau de fermeture et drapeau d'ouverture de deux paquets dans un canal temporairement inactif est signalé par un état permanent à "1", afin de se conformer à un protocole dit LAP D de raccordement d'installation d'abonné d'un réseau RNIS ; cependant, selon une autre variante, à la place de bits "1", les intervalles de silence peuvent comprendre des drapeaux successifs.

Les canaux entrants et sortants sont synchronisés en phase grâce à l'horloge maître HM incluse dans la base de temps BT et produisant un signal d'horloge 2w à la fréquence 2(32 x 16) = 1024 kHz correspondant au double du débit D = 512 kbit/s des voies multiplex MUXE et MUXS. En effet, selon la réalisation pratique, chaque installation d'abonné comprend un circuit pour récupérer l'horloge à 16 kHz à partir du flux de bits transmis dans le canal sortant respectif $CS_0$ à $CS_{31}$. Cependant, selon une autre variante, les canaux peuvent être asynchrones, et dans ce cas, le multiplexeur MC comprend en entrée, pour chaque canal entrant $CE_0$ à $CE_{K-1}$, un circuit de synchronisation asservi par la base de temps.

Chacune des voies multiplex entrante MUXE et sortante MUXS est une voie MIC classique, au débit de 512 kbit/s, comportant des trames de type MIC ayant chacune 32 intervalles temporels $IT_0$ à $IT_{31}$ respectivement assignés à des groupes de 8 bits ou octets délivrés par les canaux entrants $CE_0$ à $CE_{31}$ et fournis aux canaux sortants $CS_0$ à $CS_{31}$,

respectivement. Chaque trame MIC a une durée de $8/16 = 500\ \mu s$, chaque intervalle de temps a une durée de $500/32 = 15,625\ \mu s$, et chaque bit dans la voie multiplex occupe un intervalle élémentaire égal à $1,95\ \mu s$. Le multiplexeur de canaux MC réalise un multiplexage classique tel qu'un octet du canal $CE_0$ est inséré pendant l'intervalle $IT_0$, un octet du canal $CE_1$ est inséré pendant l'intervalle $IT_1$, et plus généralement, un octet du canal $CE_k$ est inséré pendant l'intervalle $IT_k$ de chaque trame MIC de la voie MUXE, où k est entier compris entre 0 et $K-1 = 31$.

La voie sortante de paquet VPS a un débit égal à $DV = D/2 = 256$ kbit/s et retransmet les paquets HDLC détectés dans les canaux entrants $CF_0$ à $CE_{31}$ et reconstitués par le multiplexeur MP. Comme montré à la Fig.3, dans la voie VPS, les paquets sont séparés par des drapeaux cadrés "01111110" délivrés par le multiplexeur MP afin de faciliter le traitement des données contenues dans les paquets par une unité de traitement de paquets UTP à laquelle sont reliées les voies MUXE et MUXS, comme montré à la Fig.1. Cette unité UTP assure à l'aide d'un microprocesseur, la gestion simultanée de 32 lignes bidirectionnelles à 16 kbit/s, et constitue une unité d'accès de lignes d'abonné dans un commutateur numérique pour réseau RNIS. En même temps qu'est transmis un paquet HDLC dans la voie VPS, le multiplexeur MP délivre un mot à 5 bits représentant le numéro en code binaire 0 à 31 du canal entrant respectif $CE_0$ à $CE_{31}$ à l'unité UTP, via un bus BNCE. De même, l'unité UTP transmet le numéro 0 à 31 d'un canal sortant respectif $CS_0$ à $CS_{31}$ au démultiplexeur DP via un bus BNCS, conjointement à la transmission d'un paquet destiné à ce canal sortant dans la voie entrante VPE.

De ce qui précède, il apparaît que la base de temps BT doit produire les signaux d'horloge suivants au moyen d'un circuit diviseur de fréquence CDF recevant le signal d'horloge 2w à 1024 kHz de l'horloge maîtresse HM :

- le signal d'horloge w à 512 kHz ainsi que d'autres signaux d'horloge $w.2w$, $w.\overline{2w}$ et $\overline{w}.\overline{24}$ à la fréquence de 512 kHz produits par un circuit de portes logiques CL et destinés à des commandes en lecture et écriture d'une mémoire de stockage incluse dans le démultiplexeur DP, comme cela sera expliqué plus loin;
- un mot à 3 bits, NB, représentant le rang en code binaire 0 à 7 d'un bit dans un octet inclus dans chaque intervalle de temps $IT_0$ à $IT_{31}$, de tels mots étant délivrés à la fréquence de 64 kHz ; le bit de poids faible (LSB) de ce mot correspond à un signal d'horloge à la fréquence $w/2 = 256$ kHz et donc au débit DV des voies de paquet VPS et VPE ;

- un mot à 5 bits, NCA, représentant le numéro ou adresse en code binaire 0 à 31 d'une paire de canaux entrant et sortant $CE_0$ à $CE_{31}$ et $CS_0$ et $CS_{31}$ d'une même ligne d'abonné à 16 kbit/s, c'est-à-dire le rang de l'intervalle de temps $IT_0$ à $IT_{31}$ attribué à ces canaux dans les trames des voies multiplex MUXE et MUXS, chacun de ces mots étant transmis à la fréquence de trame MIC égale à 2 kHz ; et
- un mot à 9 bits, NO, représentant un numéro d'octet en code binaire dans un paquet transmis par un canal, un tel mot étant transmis à la fréquence de $2000/2^9 = 3,9$ Hz ; comme cela apparaîtra dans la suite, ce numéro d'octet correspond à une valeur numérique initialisée par le multiplexage des canaux et n'est pas égal, en général, au rang de cet octet dans un paquet, puisqu'un paquet détecté peut débuter en correspondance avec l'un quelconque des numéros 0 à 511 produits par la base de temps ; comme on le verra dans la suite, le nombre 512 correspond à la capacité en octet de mémoires tampons pour stocker des paquets, capacité qui doit être choisie supérieure à la longueur maximale d'un paquet égale à 256 octets.

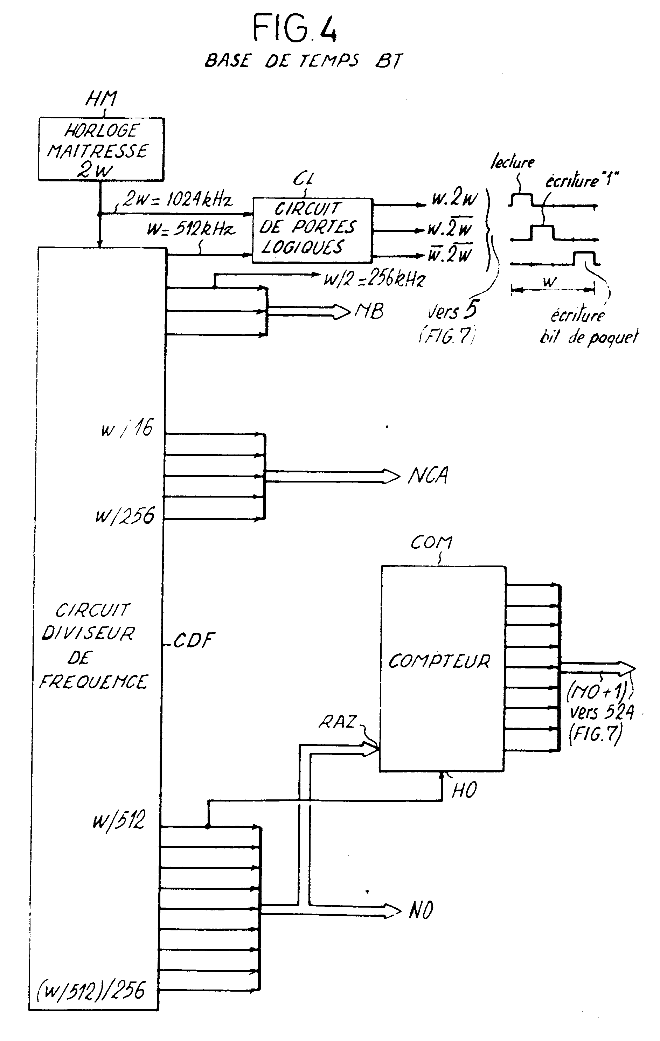

Comme montré à la Fig.4, la base de temps BT comprend également un compteur binaire à 9 étages COM pour produire un mot $(NO+1)$ à 9 bits correspondant à une adresse d'un octet en avance d'une trame dans la voie multiplex MUXS notamment, c'est-à-dire à l'octet succédant à l'octet en cours de transmission dans la voie MUXS pour un même canal sortant. Le compteur COM a une entrée de remise à zéro RAZ constituée par une porte ET recevant tous les bits du mot NO, et une entrée d'horloge HO recevant le bit de poids faible (LSB) du mot NO.

Comme montré également à la Fig.1 sous forme de bloc-diagramme, le multiplexeur de paquet MP comprend, en entrée, un circuit de détection de début et fin des paquets des canaux entrants 1, en sortie, un circuit de transmission de paquets reconstitués et drapeaux 2, et interconnecté à ces deux circuits 1 et 2, un circuit de gestion et stockage des paquets des canaux entrants 3.

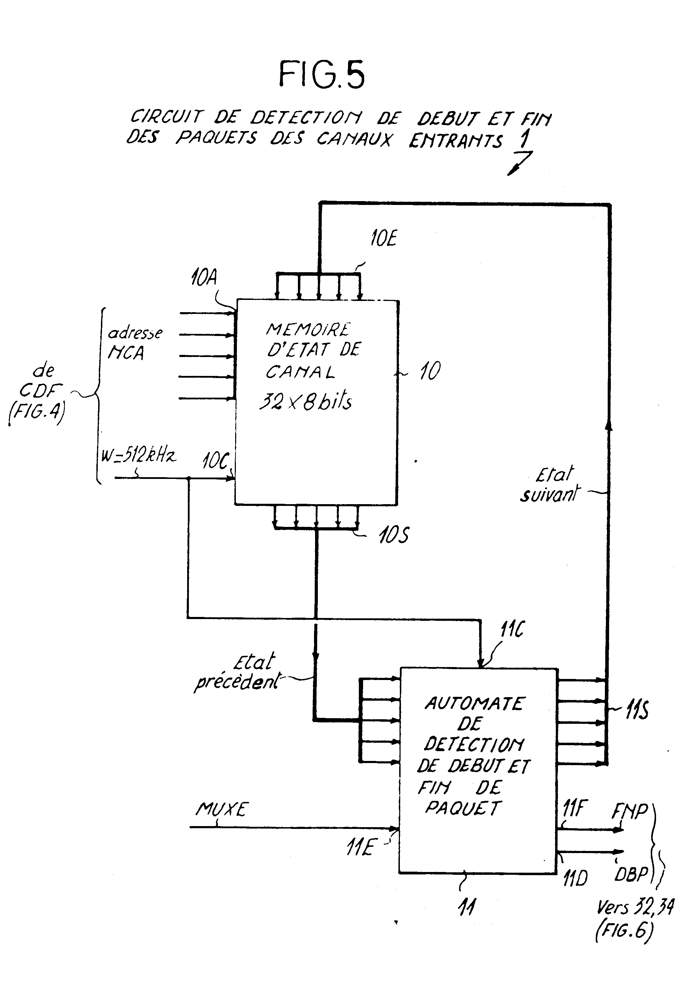

Le circuit de détection 1 est destiné à détecter les débuts et fins de tous les paquets HDLC transmis par les canaux entrants $CE_0$ à $CE_{31}$. Comme montré à la Fig. 5, il comprend essentiellement une mémoire RAM d'état de canal 10 et un automate de détection de début et fin de paquet 11 sous la forme d'un boîtier logique programmable par fusible (IFL). L'automate 11 a une entrée de donnée 11E reliée à la voie MUXE.

La mémoire RAM 10 contient $K = 32$ cellules à 8 bits respectivement allouées aux intervalles de

temps $IT_0$ à $IT_{31}$ de trame dans la voie MUXE pour mémoriser cycliquement, à chaque trame, les états des 32 canaux entrants transmis par un bus de sortie 11S de l'automate 11. La mémoire 10 est adressée en lecture-écriture, via cinq entrées 10A, par les mots d'adresse de canal NCA et est commandée en lecture-écriture, via une entrée 10C, par le signal d'horloge w également appliqué, si nécessaire, à une entrée 11C de l'automate 11, afin que la mémoire 10 délivre l'état précédent du canal correspondant à l'automate via un bus de sortie 10S. Ainsi, pendant chaque intervalle de temps $IT_k$ correspondant au canal $CE_k$, l'automate 11 examine les huit bits consécutifs du canal et en déduit huit états de canal en dépendance chacun de l'état du canal correspondant au bit reçu précédemment. A la fin de l'intervalle $IT_k$, la mémoire 10 contient dans la cellule adressée par le mot NCA = "k", l'état du canal correspondant au dernier bit dans l'intervalle $IT_k$. Ce dernier état sera ensuite utilisé pour l'examen du premier bit dans l'intervalle $IT_k$ de la trame suivante de la voie MUXE. L'automate surveille ainsi en permanence l'activité de chacun des canaux entrants $CE_0$ à $CE_{31}$.

Les états de canal indiquent particulièrement le nombre de bits "1" consécutifs récemment détecté, afin de reconnaître un drapeau d'ouverture ou de fermeture, et un paquet proprement dit ou un état inactif de canal. En réponse au premier bit à l'état "0" d'un drapeau d'ouverture précédant un paquet, une sortie 11D de l'automate 11 délivre une impulsion de début de paquet DBP vers le circuit 3 ; en réponse au dernier bit à l'état "0" du drapeau de fermeture succédant au paquet, une sortie 11F de l'automate 11 délivre une impulsion de fin de paquet FNP vers le circuit 3.

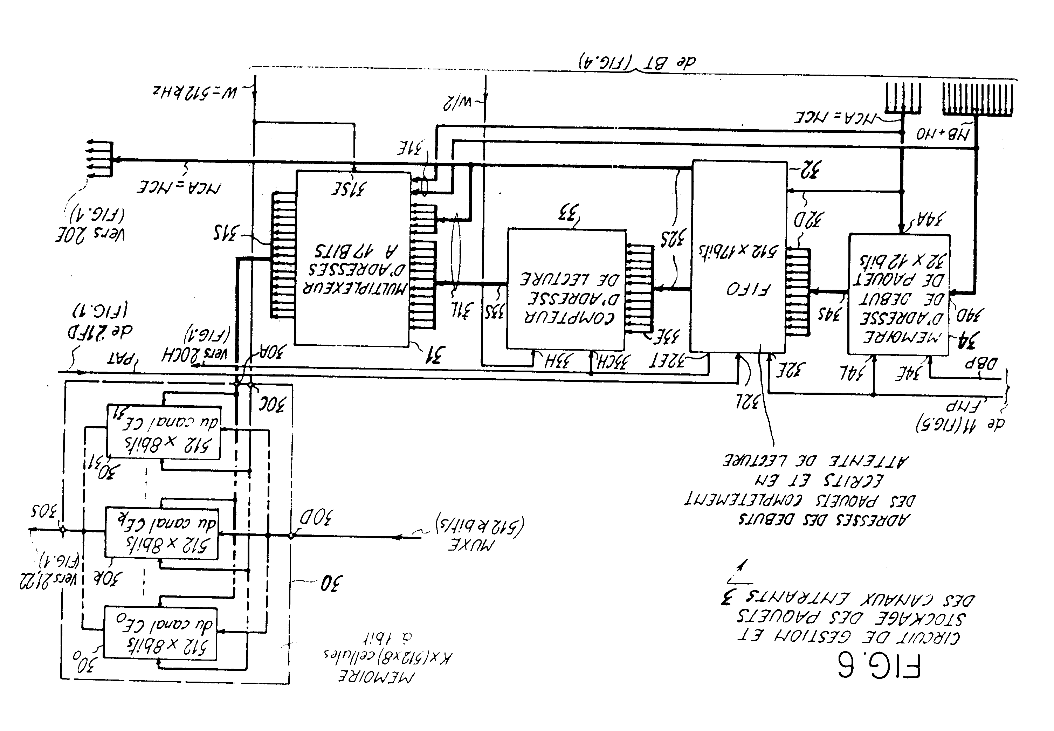

Comme montré à la Fig.6, le circuit de gestion et stockage des paquets des canaux entrants 3 est organisé autour d'une mémoire 30 destinée à mémoriser momentanément tous les bits dans les canaux entrants $CE_0$ à $CE_{31}$ au fur et à mesure de leur transmission par la voie multiplex MUXE. La mémoire 30 est divisée en K = 32 sous-mémoires RAM $30_0$ à $30_{31}$ assignées aux canaux entrants $CE_0$ à $CE_{31}$ respectivement. Chaque sous-mémoire comprend 512x8 cellules de 1 bit permettant de mémoriser au plus deux paquets contenant 256 octets au maximum. La mémoire 30 a une capacité de 512x8x32 = 128 Kbits. Les sous-mémoires ont une entrée série commune de données 30D reliées à la voie MUXE. Des entrées parallèles et communes 30A des sous-mémoires reçoivent des adresses d'écriture et des adresses de lecture ayant chacune 5 + 9 + 3 = 17 bits délivrées par un multiplexeur d'adresses 31 à travers un bus d'adresse 31S. Les adresses d'écriture et lecture sont entrelacées à l'ordre 2 sous la commande du signal d'horloge w = 512 kHz appliqué à des entrées de commande 30C et de sélection 31C de la mémoire 30 et du multiplexeur 31 par la base de temps BT. Une adresse d'écriture est délivrée dans le bus 31S pendant une demi-période w/2 et succède toujours à une adresse de lecture et précède toujours une adresse de lecture occupant également une demi-période w/2. Chacune des sous-mémoires est une mémoire circulaire qui, lorsqu'elle est complètement écrite, est à nouveau écrite à partir de sa première cellule.

Les adresses d'écriture sont appliquées à des premières entrées parallèles 31E du multiplexeur 31 par la base de temps BT et sont composées par les groupes de mot NCA + (NB + NO) dans lequel le mot à 5 bits NCA constitue une adresse de sous-mémoire, le mot à 9 bits NO constitue une adresse ou rang d'un groupe de 8 cellules consécutives dans la sous-mémoire pour mémoriser un octet de canal dans un intervalle de temps de la voie MUXE, et le mot à 3 bits NB constitue une adresse ou rang d'une cellule à 1 bit dans le groupe à 8 cellules. Ainsi la base de temps BT adresse continuellement la mémoire 30 afin d'écrire les octets des canaux $CE_0$ à $CE_{31}$ contenus dans les intervalles de temps $IT_0$ à $IT_{31}$ d'une première trame de la voie MUXE respectivement dans des premiers groupes à 8 cellules des sous-mémoires $30_0$ à $30_{31}$, puis les octets des canaux entrants d'une seconde trame de la voie MUXE respectivement dans des seconds groupes à 8 cellules des sous-mémoires, et ainsi de suite jusqu'à une trente deuxième trame de la voie MUXE. Les sous-mémoires sont complètement écrites après un cycle de 512 trames consécutives, soit après 512x500 $\mu$s = 256 ms. Les bits des canaux entrants $CE_0$ à $CE_{31}$ sont écrits systématiquement dans la mémoire 30 quelle que soit leur signification, c'est-à-dire sans se soucier qu'ils appartiennent à un paquet, à un drapeau ou à un intervalle de silence.

Par contre, les adresses de lecture appliquées à 17 secondes entrées parallèles 31L du multiplexeur 31 par une file d'attente 32 et un compteur d'adresse 33 ne sont délivrées dans le bus 31S que pour lire des paquets complètement écrits avec leurs drapeaux d'ouverture et de fermeture. La génération de ces adresses de lecture au moyen de la file d'attente 32, du compteur 33 et d'une mémoire RAM d'adresse de début de paquet 34 inclus dans le circuit 3, est maintenant décrite, toujours en référence à la Fig.6.

La mémoire 34 contient N = 32 cellules à 12 bits respectivement assignées aux canaux entrants $CE_0$ à $CE_{31}$ afin de mémoriser les adresses de début de paquet en cours de réception dans les intervalles de temps $IT_0$ à $IT_{31}$. Douze entrées de données parallèles 34D de la mémoire 34 sont reliées aux sorties de la base de temps PT délivrant les groupes de mots NB + NO, cinq entrées d'adresse parallèles 34A de la mémoire 34 sont reliées aux sorties de la base de temps délivrant les mots d'adresse de canal entrant NCA = NCE, et une entrée de commande d'écriture 34E de la mémoire 34 est reliée à la sortie 11D de l'automate 11 (Fig.5) délivrant les impulsions de début de paquet DBP. Lorsqu'un début de paquet est détecté dans un canal entrant $CE_k$ par l'automate 11, la cellule à 12 bits ayant le rang k dans la mémoire 34 adressée par l'adresse du canal $NCE_k$ mémorise le groupe de mots (NB + NO) correspondant à l'adresse de la cellule à 1 bit de la sous-mémoire correspondante $30_k$ ayant mémorisé le premier bit "0" du drapeau d'ouverture du paquet.

La file d'attente 32 est une mémoire FIFO (First-in, First-out) ayant une capacité de 512 cellules à 17 bits. La file 32 est destinée à stocker les adresses complètes des débuts des paquets qui ont été entièrement reçus et écrits dans la mémoire 30. La file 32 offre 5 + 12 = 17 entrées parallèles de données 32D parmi lesquelles cinq premières entrées reçoivent les mots d'adresse de canal entrant NCE de la base de temps BT, et douze secondes entrées sont reliées à des sorties 34S de la mémoire 34. En sortie 32S, la file 32 offre également cinq premières sorties délivrant un mot d'adresse de canal entrant NCE à cinq secondes sorties 31L du multiplexeur d'adresse 31 et à cinq entrées 20E d'un registre tampon de sortie 20 inclus dans le circuit de transmission 2 (Fig.1), et douze secondes sorties délivrant une adresse de début de paquet dans une sous-mémoire à des entrées parallèles 33E du compteur d'adresse de lecture 33. Douze autres secondes entrées 31L du multiplexeur 31 sont reliées à des sorties parallèles 33S du compteur 33. La file 32 a également une entrée de commande d'écriture 32E reliée à une entrée de commande de lecture 34L de la mémoire 34 pour recevoir des impulsions de fin de paquet FNP fournies par la sortie 11F de l'automate 11, une entrée de commande de lecture 32L pour recevoir des impulsions d'invitation de paquet-à-transmettre FAT délivrées par une sortie 21FD d'un circuit de logique de multiplexage de paquets et de drapeaux cadrés 21 inclus dans le circuit 2 (Fig.1), et une sortie d'état 32ET reliée à une entrée de chargement 33CH du compteur 33 pour indiquer par une impulsion l'état occupé par au moins une adresse de la file et charger le compteur 33 avec la première adresse écrite dans la file, en réponse à une impulsion PAT correspondant au dernier bit "0" d'un drapeau cadré succédant à un paquet transmis dans la voie VPS. Le compteur 33 a également une entrée d'horloge 33H recevant le signal d'horloge à la fréquence de w/2 = 256 kHz correspondant au débit DV des voies de paquet VPE et VPS et produit par la sortie du circuit diviseur CDF dans la base de temps BT.

En réponse à une impulsion de fin de paquet FNP correspondant au dernier bit "0" du drapeau de fermeture d'un paquet dans un canal entrant $CE_k$ multiplexé dans la voie MUXE, et délivrée par l'automate 11, l'adresse $NCE_k$ du canal et de la sous-mémoire $30_k$ et l'adresse de la cellule contenant le premier bit "0" du drapeau d'ouverture de ce même paquet respectivement fournies par la base de temps BT et lue dans la mémoire 34 sont écrites simultanément dans la file d'attente 32 via les entrées 32D. Cette écriture marque l'écriture complète du paquet avec ses deux drapeaux l'encadrant dans la sous-mémoire $30_k$ assignée audit canal. Le paquet est ainsi mémorisé dans des cellules à 1 bit de ladite sous-mémoire ayant des adresses successives, l'adresse de la première de ces cellules étant celle enregistrée dans la file 32. La file d'attente constitue ainsi une mémoire de marquage des paquets transmis par les canaux entrants, qui ont été mémorisés dans la mémoire 30 et qui sont en attente d'être lus et retransmis en série dans la voie de paquet sortant VPS à travers le circuit 2.

Selon une autre variante, la mémoire 34 mémorise les adresses complète à 17 bits des cellules dans la mémoire 30 ayant mémorisé les bits de début des paquets écrits ; dans ce cas, la mémoire 34 est reliée par 17 entrées 34D au circuit diviseur de fréquence CDF dans la base de temps BT et par 17 sorties 34S à la file d'attente 32, les premières entrées de la file étant supprimées.

Les impulsions PAT correspondent aux derniers bits "0" des drapeaux cadrés insérés entre des paquets lus et transmis dans la voie VPS, de manière à inviter la file 32 à initialiser le début de la lecture d'un paquet écrit juste après un drapeau transmis, et donc à éviter toute troncation de drapeau dans la voie VPS. Dès qu'une impulsion d'invitation de paquet-à-transmettre PAT = "1" est fournie par le circuit 2, après que celui-ci ait retransmis le dernier bit "0" du drapeau de fermeture succédant à la fin de la transmission d'un paquet dans la voie VPS, le premier groupe de mots NCE + NB + NO qui a été mémorisé dans la file 32 parmi tous ceux qui y sont écrits, est lu afin d'appliquer aux premières entrées 31L du multiplexeur d'adresses 31, le mot lu NCE en tant qu'adresse de sous-mémoire, et de charger, suite à une impulsion d'état "1" en sortie 32ET, le compteur 33 avec les mots lus NB + NO en tant qu'adresse de cellule à 1 bit dans la sous-mémoire ayant mémorise le premier bit "0" du drapeau d'ouverture d'un paquet à transmettre provenant du canal entrant ayant le même rang que la sous-mémoire. Le compteur 33 est incrémenté d'une unité modulo 512x8 = 4096, nombre égal à la capacité de sous-mémoire, par le signal d'horloge à w/2 = 256 kHz, et produit les adresses des cellules de la sous-mémoire contenant le paquet à transmettre, ces adresses étant appliquées aux secondes entrées 31L du multiplexeur 31. Selon la réalisation pratique illustrée, une adresse de lecture produite par le compteur 33 est transmise dans le bus 31S pendant deux secondes demi-périodes successives du signal w, tandis qu'une adresse d'écriture est produite pendant une première demi-période du signal w. En outre, on notera que l'adressage des cellules dans la mémoire 30 est effectué par rapport aux bits des canaux entrants, et non par rapport aux octets contenus dans les intervalles $IT_0$ à $IT_{31}$ de la voie multiplex MUXE, puisque le premier bit "0" d'un drapeau, notamment d'un drapeau d'ouverture, n'est pas a priori obligatoirement un premier bit dans un intervalle de temps $IT_0$ à $IT_{31}$, comme montré à la Fig.2, et un drapeau est en général réparti dans deux intervalles de temps d'un canal, c'est-à-dire est "décadré" par rapport aux intervalles de temps. Cet adressage par cellule d'un bit assure ainsi une lecture des paquets mémorisés avec leurs drapeaux, ainsi que des bits "1" dans des intervalles de silence succèdant à des paquets lus lorsque, à la fin de chacun de ces paquets, la file 32 est vide et aucun autre paquet est momentanément à lire. En effet, lorsque la file d'attente 32 est vide après le dernier paquet lu, la sortie 32ET demeure à "0" en réponse aux impulsions de fin de drapeau PAT tant qu'une nouvelle adresse n'est pas écrite dans la file ; le compteur 33 continue à lire la sous-mémoire correspondante et par suite, des bits "1" sont transmis par la sortie 30S. Ces derniers bits "1" sont remplacés par des drapeaux dans le circuit 21, comme cela apparaîtra ci-dessous.

En se référant à nouveau à la Fig.1, le circuit de transmission 2 comprend le registre d'adresse de canal entrant 20, le circuit logique de multiplexage de paquets et de drapeaux cadrés 21, un circuit de détection de début et fin de paquet lu 22 et un générateur de drapeaux 23. La sortie 30S commune aux sous-mémoires $30_0$ à $30_{31}$ est reliée à une première entrée 21P du circuit logique 21 et à une entrée 22E du circuit de détection 22. Une seconde entrée 21DR du circuit logique 21 est reliée à une sortie série 23S du générateur 23. Une entrée de chargement 20CH du registre 30 est reliée à la sortie 32ET de la file d'attente 32 afin de charger le registre 20 avec l'adresse du canal NCA = NCE dès la lecture d'un paquet, en vue de transmettre cette adresse à l'unité de traitement UTP. Une entrée de sélection 21SE du circuit logique 21 reçoit par un sortie 22S du circuit de détection 22 un signal de présence de paquet lu PPL. Le signal PPL est à l'état "1" entre le premier bit "0" du drapeau d'ouverture et le dernier bit "0" du drapeau de fermeture d'un paquet lu et transmis par la sortie 30S afin de sélectionner dans le circuit logique 21 les entrées 21P et 21DR.

Tous les circuits 21 à 23 ont des entrées d'horloge 21H à 23H recevant le signal à la fréquence de w/2 = 256 kHz pour effectuer les opérations suivantes pour chaque bit dans la voie VPS. Dans le circuit 22, les huit derniers bits transmis par la sortie de mémoire 30S sont mémorisés dans un registre à décalage et sont comparés avec un drapeau contenu dans une mémoire morte ou câblée afin de détecter le premier bit "0" du drapeau d'ouverture et le dernier bit "0" du drapeau de fermeture de chaque paquet lu dans la mémoire 30 et ainsi produire le signal PPL. La sortie 23S du générateur 23 qui peut être constitué par une mémoire morte circulaire, fournit en permanence un drapeau en série par sa sortie 23S. Ainsi, dans le circuit 2, le circuit de détection 22 surveille en permanence les bits sortant de la mémoire 30 pour détecter les débuts et les fins de paquets en cours de transmission dans la voie VPS. Lorsqu'aucun paquet n'est lu dans la mémoire 30, le signal PPL, fourni par le circuit 22 est à l'état "0" et commande dans le circuit logique 21 le transfert de drapeaux consécutifs du générateur 23 vers la voie VPS, drapeaux dont les derniers bits "0" correspondant à des impulsions d'invitation de paquet-à-transmettre PAT produites en sortie 21FD. Dès que le circuit de détection 22 détecte le premier bit "0" d'un drapeau d'ouverture d'un paquet lu dans la mémoire 30, le signal PPL bascule à l'état "1" pour commander dans le circuit logique 21, le transfert du paquet lu, de la mémoire 30 dans la voie VPS, et simultanément, une impulsion en sortie 32ET de la file 32 charge l'adresse de canal NCE correspondant au paquet lu, appliquée par les cinq premières sorties 32S de la file 32 dans le registre 20. Puis, en réponse à une détection du dernier bit "0" du drapeau de fermeture du paquet lu, le signal PPL bascule à l'état "0" pour le transfert de drapeaux à travers le circuit logique 21, et pour inhiber des bits "1" lus éventuellement après le paquet lu. Dans le circuit 21, sont prévus des moyens logiques à l'entrée 21DR pour cadrer les drapeaux délivrés par le générateur 23 par rapport au dernier bit "0" du drapeau de fermeture, afin que le premier bit "0" du premier drapeau fourni par le générateur et à transmettre dans la voie VPS succède immédiatement au dernier bit "0" du drapeau de fermeture. Puisque les impulsions PAT correspondent aux fins de ces drapeaux cadrés, le début du paquet lu suivant succède immédiatement au dernier bit "0" d'un drapeau cadré.

On décrit maintenant le démultiplexeur de paquets DP accomplissant des opérations réciproques de celles du multiplexeur de paquets MP. En se référant à la Fig.1, le démultiplexeur DP effectue une reconnaissance des paquets transmis en série dans la voie de paquet entrante VPE au moyen d'un circuit de détection de paquet 4 relié à la voie VPE, et mémorise les paquets entrants reconnus et les aiguille par groupe de 8 bits dans les intervalles de temps de canal correspondants $IT_0$ à $IT_{31}$ de la voie multiplex sortante MUXS, et retransmet les groupes à 8 bits des paquets et les suites de "1" pendant les intervalles de silence dans les intervalles de temps de canaux au moyen d'un circuit de gestion et stockage de paquets 5 interconnecté entre les voies VPE et MUXS et coopérant avec un circuit 6 ayant une entrée 6E reliée à la voie multiplex MUXS pour détecter les fins des paquets complètement lus dans le circuit 5 et transmis dans la voie MUXS.

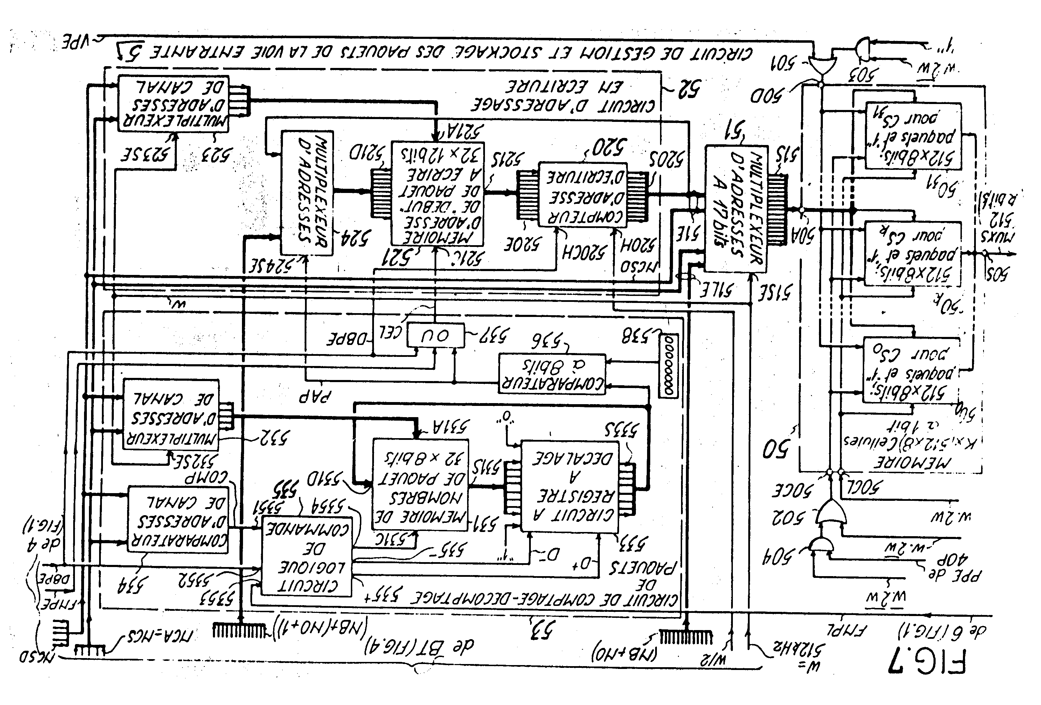

Comme montré également à la Fig.1, le circuit 4 disposé en entrée du démultiplexeur de paquets DP comprend un circuit de détection de début et fin de paquet 40 et un registre d'adresse de canal sortant 41. Des entrées 50D, via une porte OU 501 (Fig.7), et 40E des circuits 5 et 4 sont reliées à la voie de paquet entrante VPE, et cinq entrées parallèles du registre 41 sont reliées au bus d'adresse de canal BNCS. Une entrée d'horloge 40H du circuit 40 reçoit le signal d'horloge à la fréquence w/2 correspondant au débit DV = 256 kbit/s de la voie VPE. Dès que l'unité de traitement de paquet UTP demande d'introduire un paquet à destination d'un canal sortant demandé $CS_0$ à $CS_{31}$, elle applique une impulsion de chargement CH à des entrées 40CH et 41CH du circuit de détection 40 et du registre 41 en correspondance avec le dernier bit "0" d'un drapeau précédant le drapeau d'ouverture du paquet, et charge le registre 41 avec l'adresse de canal sortant demandé NCSD, via le bus BNCS. Le circuit 40 qui surveille en permanence la voie entrante VPE, détecte le début et la fin du paquet en cours de réception qui sont respectivement signalés à des sorties 40D et 40F du circuit 40 par des signaux DBPE et FNPE. Le circuit 40 délivre également par une sortie 40P un signal de présence de paquet entrant PPE qui est à l'état "1" entre le premier bit "0" du drapeau d'ouverture et le dernier bit "0" du drapeau de fermeture d'un paquet entrant. Le circuit 40 est analogue au circuit de détection 22 inclus dans le circuit de transmission de paquets reconstitués et drapeaux cadrés 2 montré à la Fig.1, et détecte également les drapeaux introduits entre les paquets transmis en série dans la voie VPE.

Le circuit 6 en sortie du démultiplexeur de paquets DP est analogue au circuit de détection 1 en entrée du multiplexeur de paquets MP. Le circuit 6 analyse pour chaque intervalle de temps $IT_0$ à $IT_{31}$ dans la voie multiplex MUXS, c'est-à-dire pour chaque canal $CS_0$ à $CS_{31}$, les groupes de 8 bits afin de détecter la fin de chaque paquet complètement lu dans le circuit 5 et transmis dans la voie MUXS, c'est-à-dire le dernier bit "0" du drapeau de fermeture du paquet. Cette détection est traduite par une impulsion FNPL appliquée à une entrée 5353 du circuit 5.

Comme le circuit de gestion et stockage 3, le circuit de gestion et stockage de paquets 5 montré à la Fig.7 est organisé autour d'une mémoire 50 destinée à mémoriser momentanément au moins tous les bits contenus dans les paquets transmis par la voie entrante VPE. Ainsi, la mémoire 50 est identique à la mémoire 30 et comporte K = 32 sous-mémoires RAM circulaires $50_0$ à $50_{31}$ ayant chacune 512x8 cellules à 1 bit et assignées respectivement aux intervalles de temps $IT_0$ à $IT_{31}$ de la voie multiplex sortante MUXS et donc aux canaux sortants $CS_0$ à $CS_{31}$. Les sous-mémoires $50_0$ à $50_{31}$ ont en commun une entrée de données 50D reliée à la voie VPE à travers une première entrée d'une porte OU à deux entrées 501, une sortie de données 50S reliée à la voie MUXS, dix-sept entrées d'adresse d'écriture-lecture 50A reliées à des sorties 51S d'un multiplexeur d'adresses 51, une entrée de commande en lecture 50CL recevant le signal d'horloge w.2w de la base de temps BT, et une entrée de commande en écriture 50CE pour commander systématiquement une écriture d'un bit "1" dans une cellule adressée et lue et une écriture de bits de paquet pendant un créneau PPE = 1, comme on le verra dans la suite.

A des entrées 51E et 51LE, le multiplexeur 51 reçoit des adresses d'écriture et des adresses de lecture ayant chacune 5 + 12 = 17 bits. Une adresse d'écriture est composée d'une première partie à 5 bits parallèles constituée par l'adresse NCSD de la sous-mémoire $50_0$ à $50_{31}$ correspondant au canal demandé et fournie par des sorties 41S du registre 41, et d'une seconde partie à douze bits parallèles constituée par l'adresse d'une cellule à 1 bit de la sous-mémoire $50_0$ à $50_{31}$ correspondant au canal demandé et fournie par des sorties 520S d'un compteur d'adresse d'écriture 520 inclus dans un circuit d'adressage en écriture 52 décrit plus loin. Comme le compteur 33, le compteur 520 est une compteur modulo 512 x 8 = 4096. Comme l'adressage en écriture des sous-mémoires $30_0$ à $30_{31}$, les sous-mémoires $50_0$ à $50_{31}$ sont lues continûment et cycliquement par période de 512 trames des voies MUXE et MUXS sous la commande de la base de temps BT, un groupe de 8 cellules consécutives étant lu dans chaque sous-mémoire par trame. Par suite, les sous-mémoires $50_0$ à $50_{31}$ sont lues selon l'organisation des trames de la voie multiplex MUXS, et une adresse de lecture de cellule est constituée par un groupe de mots ((NCS = NCA) + (NB + NO)) à 17 bits fournis par le circuit diviseur de fréquence CDF dans la base de temps BT. La base de temps BT constitue ainsi des moyens d'adressage en écriture de la mémoire 30 et en lecture de la mémoire 50. Au moyen du signal d'horloge w = 512 kHz appliqué à une entrée 51SE du multiplexeur 51, les adresses de lecture et d'écriture sont multiplexées et occupent chacune une demi-période du signal w égale à 976,5 ns.

L'écriture d'un bit dans une cellule d'une sous-mémoire $50_0$ à $50_{31}$ est réalisée en deux opérations.

D'une part, un "1" binaire est écrit systématiquement dans la cellule immédiatement après la lecture de la cellule, afin de transmettre des "1" entre les paquets avec leurs drapeaux d'ouverture et de fermeture dans le canal sortant correspondant $CS_0$ à $CS_{31}$, pendant les intervalles de silence. A cette fin, une adresse appliquée aux entrées 51LE du multiplexeur 51 sert d'adresse de lecture de la cellule pendant le premier quart d'une période du signal w, signalé par le signal w.2w, et d'adresse d'écriture d'un "1" dans la cellule pendant le second quart d'une période du signal w, signalé par le signal w.$\overline{2w}$. Le signal w.$\overline{2w}$ est appliqué à une première entrée d'une porte OU à deux entrées 502 ayant une sortie reliée à l'entrée de commande en écriture CF de la mémoire 50. Une porte ET 503 a une première entrée constamment à l'état "1", une seconde entrée recevant le signal w.$\overline{2w}$ et une sortie reliée à une seconde entrée de la porte OU 501. La porte 503 permet aussi d'écrire systématiquement un "1" dans toutes les cellules de la mémoire 50, après leur lecture respective.

D'autre part, un paquet transmis par la voie entrante VPE est écrit continûment dans la sous-mémoire $50_0$ à $50_{31}$ adressée par l'adresse NCSD contenue dans le registre d'entrée 41.

Le bit "1" écrit dans une cellule n'est effacé pendant le dernier quart d'une période du signal w que lorsqu'un bit de paquet entrant doit être écrit dans cette cellule. Pour cela est prévue une porte ET 504 ayant une première entrée recevant le signal d'horloge $\overline{w}.\overline{2w}$, une seconde entrée recevant le signal de présence de paquet PPE délivré par la sortie 40P du circuit de détection 40, et une sortie reliée à une seconde entrée de la porte OU 502. Ainsi un bit de paquet entrant transmis à travers la porte OU 501 est écrit dans une cellule de la mémoire 50 dont l'adresse d'écriture kest appliquée aux entrées 51E du multiplexeur 51 pendant une seconde demi-période du signal w, en réponse à une impulsion $\overline{w}.\overline{2w}$ lorsque PPE = 1. Il est à noter, comme on le verra dans la suite, que l'instant d'écriture d'un "1" dans une cellule précède l'instant d'écriture d'un bit de paquet dans cette cellule, la durée entre ces deux instants d'écriture étant au minimum égale à une période de trame dans la voie MUXS.

L'écriture de paquets à destination du canal sortant demandé dans la sous-mémoire correspondante répond à deux critères, dont le second est le corollaire du premier.

Le premier critère consiste à occuper la sous-mémoire par un paquet pendant une durée minimale afin de permettre une mémorisation maximale de paquets pouvant être transmis les uns derrière les autres dans la voie entrante VPE et destinés au même canal sortant demandé, puisque le débit D/2 = 256 kbit/s de la voie entrante VPE est nettement plus élevé que celui d = 16 kbit/s des canaux sortants. Sachant qu'une sous-mémoire est lue cycliquement, c'est-à-dire les 512 groupes de 8 cellules sont lus chacun à chaque période de trame de la voie multiplex MUXS, il convient de mémoriser un premier paquet dans la sous-mémoire, initialement écrite complètement avec des bits "1", dans des cellules de la sous-mémoire qui sont à lire juste immédiatement après la cellule de la sous-mémoire en cours de lecture lorsque le premier paquet est signalé par le circuit de détection 40 ; dans le cas contraire, c'est-à-dire si le début du premier paquet était mémorisé dans une cellule précédant la cellule en course de lecture selon l'ordre croissant des adresses de lecture de la sous-mémoire modulo 512 x 8, la fin du paquet serait alors d'abord lue et retransmise et le début du paquet serait lu après sensiblement un cycle complet (256 ms) de lecture de la sous-mémoire, ce qui, bien entendu, entraînerait une interprétation incorrecte et donc inadmissible du paquet dans l'installation d'abonné associée au canal sortant demandé. Selon l'invention, le début d'un premier paquet correspondant au premier bit "0" du drapeau d'ouverture du paquet est écrit dans une cellule de la sous-mémoire respective devant être lue après une durée d'une trame de la voie multiplex MUXS, soit après 500 $\mu$s, succédant à l'instant de lecture de la cellule correspondant à l'instant d'arrivée du premier paquet. Par suite, lorsque la sous-mémoire est vide de paquet, une adresse d'écriture en avance d'un octet, par rapport à l'adresse de lecture en cours, est stockée en permanence dans une mémoire 521 adressée cycliquement à la fréquence de trame et incluse dans le circuit d'adressage en écriture 52, afin de permettre l'incrémentation du compteur d'adresse d'écriture 520 initialisé avec l'adresse d'écriture stockée. Cette dernière adresse est l'adresse (NB + (NO + 1)), établie par le compteur COM dans la base de temps BT (Fig. 4).

Le second critère consiste à mémoriser les paquets dans des cellules successives d'une sous-mémoire selon l'ordre cyclique d'adressage en lecture ; en d'autres termes, lorsque la sous-mémoire n'est pas vide de paquet, et comprend au moins un premier paquet en cours de lecture, le début du paquet suivant est mémorisé dans les cellules succédant aux cellules ayant mémorisé la fin du premier paquet. Ainsi, d'une part, l'espace mémorisé encore disponible pour la mémorisation d'autres paquets est maximal, d'autre part, les cellules mémorisant les paquets suivants ont toujours des adresses succédant à celle en course de lecture, ou plus généralement à celles contenant le paquet étant moins rapide que l'écriture du paquet, il convient donc de mémoriser l'adresse de la cellule ayant mémorisé le dernier bit d'un paquet venant d'être écrit et donc précédant la cellule devant mémoriser le premier bit au début du paquet suivant à écrire, afin de repérer l'emplacement en sous-mémoire destiné à l'écriture du paquet suivant. Cette dernière adresse de cellule est également mémorisée dans la mémoire 521.

De ce qui précède, il apparaît que le circuit de gestion et stockage 5 doit également comprendre un circuit de comptage-décomptage de paquets 53 pour indiquer en permanence au circuit d'adressage en écriture 52, l'état de chacune des sous-mémoires $50_0$-$50_{31}$, vide ou occupée par au moins un bit de paquet, et par suite, pour commander l'écriture-lecture de la mémoire d'adresse 521 en fonction des signaux de début et fin de paquet entrant à écrire DBPE et DNPE fournis par le circuit de détection 40 en entrée du démultiplexeur de paquets DP (Fig.1) et en fonction du signal de fin de paquet sortant lu FNPL fourni par le circuit de détection 6 en sortie du démultiplexeur de paquets DP. Les signaux DBPE, FNPE et FNPL sont des impulsions ayant une largeur d'un bit dans la voie MUXE, égale à 1,9 $\mu$s. En outre, les circuits 52 et 53 utilisent le signal d'horloge w à la fréquence des bits dans la voie MUXS, égale à 512 kHz, afin d'adresser des mémoires 521 et 531, comme on le verra ci-après.

En référence à la Fig.7, sont décrits ci-après le circuit d'adressage en écriture 52, puis le circuit de comptage-décomptage de paquets 53.

Dans le circuit 52, la mémoire d'adresse de cellule de "début" de paquet 521 est une mémoire RAM contenant K = 32 cellules à 12 bits. Un bus d'adressage 521A de la mémoire 521 est relié à 5 sorties parallèles d'un multiplexeur d'adresse de canal 523. Le multiplexeur 523 reçoit par deux bus d'entrée à 5 bits, l'adresse du canal demandé NCSD du registre 41 et l'adresse du canal sortant en cours de lecture NCA = NCS de la base de temps BT, et multiplexe séquentiellement ces deux adresses sous la commande du signal d'horloge w. Ainsi chaque adresse aux entrées 521A occupe une durée égale à la moitié de celle d'un intervalle élémentaire de bit, soit 976,5 ns. Douze sorties parallèles 521S de la mémoire 521 sont reliées à des entrées 520E du compteur d'adresse d'écriture 520.

Au moyen d'une entrée de chargement 520CH recevant une impulsion de début de paquet à écrire DBPE fournie par le circuit 40, et d'une entrée d'horloge 520H recevant le signal w/2 à 250 kHz, le compteur 520 est chargé par une adresse de cellule de "début" de paquet lue dans la mémoire 520 et est incrémenté d'une unité modulo 512 x 8 en réponse à chaque impulsion du signal w/2 afin de fournir successivement des adresses d'écriture de cellules dans une sous-mémoire $50_0$ à $50_{31}$ sélectionnée par l'adresse de canal demandé NCSD. Le bus de sortie à 12 fils 520S du compteur 520 est relié à douze des entrées 51E du multiplexeur d'adresses de lecture et écriture 51 et également à douze premières entrées d'un autre multiplexeur 524 inclus dans le circuit 52. Le multiplexeur 524 reçoit par douze secondes entrées, l'adresse d'écriture $(NB + (NO + 1))$ fournie par le compteur COM (Fig.4) et dite en avance d'un octet par rapport à l'adresse de la cellule en cours de lecture relativement à un même canal. Les premières et secondes entrées du multiplexeur 524 sont sélectionnées par un signal de présence-absence de paquet écrit PAP fourni par un comparateur 536 inclus dans le circuit 53. Le signal PAP est à l'état "1", respectivement pendant les périodes w de lecture-écriture d'une sous-mémoire $50_0$ à $50_{31}$ lorsque cette sous-mémoire est vide de paquet. Ainsi, l'adresse d'écriture fournie par les sorties 520S du compteur 520, et l'adresse d'écriture en avance $(NB + (NO + 1))$ sont appliquées à douze entrées parallèles de donnée 521D de la mémoire 521 par le multiplexeur 524 respectivement en réponse à des états "0" et "1" du signal PAP. Cependant de telles adresses ne sont écrites dans la mémoire 521 qu'en fonction de l'état d'un signal de commande en écriture-lecture CEL appliqué à une entrée 521C de la mémoire 521. Comme on le verra dans la suite, le signal CEL est fourni par une porte OU à trois entrées 537 incluse dans le circuit de comptage-décomptage de paquet 53 et dépend principalement des signaux DBPE, FNPE et du signal de présence-absence de paquet écrit PAP établi en fonction des signaux DBPE, FNPE et FNPL par le circuit 53.

Dans le circuit de comptage-décomptage de paquet 53, la mémoire des nombres de paquets dans les sous-mémoires 531 est une mémoire RAM ayant K = 32 cellules à 8 bits. Chaque cellule à 8 bits mémorise le nombre de paquets mémorisés dans la sous-mémoire associée $50_0$ à $50_{31}$, ce nombre étant représenté par un mot à 8 bits dans lequel un bit à l'état "1" indique un paquet contenu dans la sous-mémoire, les bits "1" étant placés dans le mot de nombre de paquet en commençant par exemple par la gauche, c'est-à-dire vers le haut selon la Fig.8 ; ainsi, lorsqu'une sous-mémoire contient ou 0, ou 3, ou 5 bits, le mot de nombre de paquet est "00000000", "11100000", ou "11111000". Par "paquet contenu dans une sous-mémoire" est désigné ou un paquet en cours d'écriture, ou un paquet en course de lecture, ou un paquet complètement écrit et un attente d'être lu. Cinq entrées parallèles d'adressage 531A de la mémoire 531 sont reliées à un multiplexeur d'adresse 532 identique au multiplexeur 523. Ainsi, le multiplexeur 532 reçoit les adresses de canaux sortants NCS = NCA de la base de temps BT et l'adresse de canal demandé NCSD du registre 41, et multiplexe séquentiellement chacune des adresses de canaux sortants et l'adresse NCSD sous la commande du signal d'horloge w à la fréquence de 512 kHz.

Dans le circuit 53 sont prévus des moyens de comptage-décomptage de paquet utilisés en commun pour chacune des sous-mémoires $50_0$ à $50_{31}$. Ces derniers moyens consistent en un circuit à registre à décalage 533 ayant huit sorties reliées à des entrées de donnée 531D de la mémoire 531, un comparateur d'adresse de canal à 5 bits 534 et un circuit logique de commande d'écriture-lecture et de décalage 535. Le circuit 533 est équivalent à un registre à décalage connu ayant 8 étages dont une entrée, à gauche ou en haut, est à l'état "1", les huit étages centraux reçoivent un mot de nombre de paquet lu par les sorties 531S de la mémoire 531, et une autre entrée, à droite ou en bas, est à l'état "0", et dont huit entrées parallèles sont reliées aux sorties 531S et huit sorties 533S sont reliées aux entrées 531D. Le contenu du registre à décalage est décalé vers la droite pour introduire en "1" supplémentaire et retirer un "0" en réponse à un signal de décalage $D^+$ fourni par le circuit logique 535, et est décalé vers la gauche pour supprimer un "1" et ajouter un "0" en réponse à un signal de décalage $D^-$ fourni par le circuit 535.

Le comparateur logique 534 reçoit en parallèle les adresses de canaux sortants NCS de la base de temps BT et l'adresse de canal demandé NCSD du registre 41 afin d'appliquer à une première entrée 5351 du circuit logique 535 un créneau COMP = 1. Ce créneau a une largeur égale à la période d'octet de 7,8 $\mu$s afin de permettre la soustraction d'une unité au nombre de paquet correspondant au canal demandé en réponse à une impulsion FNPL. Le circuit logique 535 comporte également deux autres entrées 5352 et 5353 recevant respectivement les impulsions DBPE fournies par le circuit 40 et les impulsions FNPL fournies par le circuit 6, une sortie 5354 reliée à une entrée de commande en lecture-écriture 531C et de la mémoire 531, et deux sorties $535^+$ et $535^-$ fournissant les signaux $D^+$ et $D^-$ à deux entrées d'horloge du circuit à registre à décalage 533. La sortie 5354 fournit un signal de commande de lecture-écriture lorsque DBPE = 1, ou lorsque COMP = 1 et FNPL = 1, et les sorties $535^+$ et $535^-$ fournissent les signaux $D^+$ et $D^-$ respectivement lorsque DBPE = 1 et lorsque COMP = 1 et FNPL = 1. Il est à noter que selon une autre variante, le circuit 533 peut être remplacé par un compteur-décompteur classique dont le chargement est commandé par la sortie 5354, les autorisations de comptage et décomptage par les sorties $D^+$ et $D^-$, et le signal d'horloge est le signal w.

Le circuit 53 comprend également le comparateur logique à 8 bits 536 et la porte OU à trois entrées 537. Le comparateur 536 compare le mot de nombre de paquets délivré par les sorties 533S du circuit 533 avec un mot nul "00000000" contenu dans une mémoire morte câblée 538 afin d'appliquer des impulsions PAP = 1 à une première entrée de la porte 537 et à l'entrée de sélection 524SE du multiplexeur 524. Les seconde et troisième entrées de la porte 538 reçoivent les impulsions DBPE et FNPE fournies par le registre 41. L'entrée de commande en lecture-écriture 521C de la mémoire 521 est reliée à la sortie de la porte OU 537.

Le fonctionnement des circuits 52 et 53 est décrit pour des paquets $P_1$, $P_2$ et $P_3$ transmis successivement par la voie de paquet entrante VPS et destinés au canal demandeur $CS_k$ correspondant à l'intervalle de temps $IT_k$ dans les trames de la voie multiplex MUXS et à la sous-mémoire $50_k$ de rang k, pour $0 \leq k \leq 31$.

Avant la transmission des paquets $P_1$, $P_2$ et $P_3$, la sous-mémoire $30_k$ est vide de paquet. Toutes les cellules de la mémoire $30_k$ contiennent des bits "1" lus et écrits à la fréquence w, via les portes 502 et 503, la porte 504 étant fermée par PPE = 1. La cellule à 8 bits et la cellule à 12 bits, toutes deux de rang k, dans les mémoires 531 et 521 sont adressées uniquement lorsque NCA = $NCS_k$ à travers les multiplexeurs 532 et 523. La cellule de rang k dans la mémoire 531 contient le mot "00000000" et n'est pas lue et écrite, puisque DBPE = FNPL = 0. Le signal PAP sortant du comparateur 536 est à l'état "1" pendant les demi-intervalles $IT_k$ au cours desquels le multiplexeur 523 sélectionne l'adresse NCA = $NCS_k$ afin d'écrire successivement les adresses d'écriture en avance d'un octet (NB + (NO + 1)) dans la cellule de rang k de la mémoire 521 à travers le multiplexeur 524, adresses d'écriture correspondant aux intervalles élémentaires de 1 bit dans les intervalles $IT_k$.

Dès que le circuit de détection 40 (Fig. 1) détecte le premier bit "0" du drapeau d'ouverture du paquet $P_1$ et le registre 41 est chargé par l'adresse NCSD = $NCS_k$ en réponse au signal CH délivré par l'unité UTP, une impulsion de début de paquet entrant DBPE commande la lecture des cellules de rang k dans les mémoires 521 et 531 adressée par l'adresse NCSD = $NCS_k$. L'adresse

(NB + (NO + 1)) en avance d'un octet qui est lue dans la mémoire 521 est chargée dans le compteur 520 qui incrémente cette dernière adresse d'une unité à chaque impulsion w/2 afin de produire les adresses d'écriture des cellules de la sous-mémoire $50_k$ enregistrant le paquet $P_1$. Suite au signal CH, le circuit 40 ouvre la porte ET 504 par le signal PPE passant à l'état "1" afin de permettre l'écriture des bits du paquet $P_1$ dans la sous-mémoire $50_k$, en effaçant les bits "1" précédemment écrits. Sachant que selon la réalisation décrite, le débit de la voie VPS est égale à la moitié de celui de la voie multiplex MUXS, une adresse d'écriture est répétée deux fois en sortie 51S du multiplexeur 51 pendant deux intervalles élémentaires de bit consécutifs de la voie multiplex MUXS. Le début du drapeau d'ouverture du paquet $P_1$ est ainsi écrit, au moins partiellement, dans un bloc de 8 cellules à 1 bit de la sous-mémoire $50_k$ égal au rang de celui d'un bloc précédant de 8 cellules de cette sous-mémoire augmenté d'une unité, ce dernier bloc précédant étant en cours de lecture pour transmettre des "1" précédant le drapeau d'ouverture du paquet $P_1$. Par ailleurs dans le circuit 53, l'impulsion DBPE correspondant au début du paquet $P_1$ produit successivement la lecture du mot "00000000" dans la cellule de rang k de la mémoire 531, grâce au signal de commande en sortie 5354 du circuit logique 535, un décalage d'un bit du mot précédant lu dans le circuit à registre à décalage 523, sous la commande du signal $D^+$, et finalement l'écriture du nouveau mot de nombre de paquet "10000000" dans la cellule de rang k de la mémoire 531. Un tel cycle -lecture-décalage et modification-écriture- est réalisé pour chaque impulsion de commande en sortie 5354. Le signal PAP est encore à l'état "1" pendant le début du drapeau d'ouverture, et donc modifie le contenu de la cellule de rang k dans la mémoire 521, avec les mots correspondants (NB + (NO + 1)) ; mais cette modification est sans importance, puisque cette cellule enregistrera l'adresse de cellule de fin de paquet en réponse au signal FNPE.

Puis pendant les intervalles de temps suivants $IT_{k+1}$, $IT_{k+2}$, etc..., le paquet $P_1$ est écrit complètement dans les cellules de la sous-mémoire $50_k$ ayant des adresses succédant à l'adresse de cellule de début de paquet par des incrémentations successives d'une unité dans le compteur 520, le contenu de la cellule de rang k dans la mémoire 531 n'est pas modifié et le signal PAP est égal à "0", et la cellule de rang k dans la mémoire 521 n'est pas commandée en lecture-écriture grâce à l'entrée 521C à l'état "0". Il est à noter que dès intervalle $IT_k$ dans la seconde trame de la voie MUXS succédant à celle pendant laquelle le début du paquet est écrit, le drapeau d'ouverture du paquet $P_1$ commencera à être lu. Ainsi, eu égard à la longueur maximale d'un paquet égale à 256 octets, soit nettement supérieur à la longueur d'une trame de la voie MUXS, égale à 32 octets, l'écriture du prochain paquet $P_2$ intervient en général après la lecture du début du paquet précédant $P_1$, compte-tenu également du rapport de débit D/DV, ou parfois avant la lecture du paquet $P_1$, si celui-ci est un paquet court, par exemple de signalisation. En outre, chaque fois que des bits du paquet $P_1$ sont écrits, des bits "1" sont lus et transmis dans la voie multiplex MUXS pendant les intervalles successifs $IT_k$, $IT_{k+1}$, $IT_{k+2}$,... pour l'adressage en lecture-écriture des sous-mémoires $50_k$, $50_{k+1}$, $50_{k+2}$,... en entrée 51LE, sous la commande des signaux d'horloge w.2w et w.$\overline{2w}$.

La fin de l'écriture du paquet $P_1$ signalée par une impulsion FNPE produite par le circuit 40 est traduite dans la cellule de rang k de la mémoire 521, sous la commande de la sortie de la porte OU 537 momentanément à l'état "1", par l'écriture de l'adresse de la cellule dans la sous-mémoire $50_k$ ayant mémorisé le dernier bit "0" du drapeau de fermeture du paquet $P_1$ ; cette dernière adresse est fournie par le compteur 520 via le démultiplexeur 524 qui sélectionne ses douze premières entrées.

Puis le compteur 520 continue à être incrémenté pendant la réception de drapeaux dans la voie de paquet VPE, dans l'attente de la réception du paquet suivant $P_2$. Les bits de ces drapeaux ne sont pas écrits dans les cellules de la mémoire $50_k$ succèdant à celles ayant mémorisé le paquet $P_1$ et n'effacent pas les bits "1" écrits, puisque le signal PPE est à nouveau à l'état "0" et ferme la porte 504.

Dès qu'une impulsion FNPE est établie en réponse au début du paquet entrant $P_2$, les mémoires 521 et 531 sont lues comme précédemment pour le paquet $P_1$. Le circuit 533 transforme le mot de nombre de paquet "10000000" dans la cellule de rang k de la mémoire 531 en le mot "11000000" et le signal PAP demeure à l'état "0". L'adresse de la cellule de la sous-mémoire $50_k$ ayant enregistré le dernier bit du drapeau de fermeture de paquet $P_1$ est lue dans la cellule de rang k de la mémoire 521 et chargée dans le compteur 520 qui fournit alors les adresses des cellules suivantes de la sous-mémoire $50_k$ pour l'écriture du paquet $P_2$. Les mêmes opérations s'effectuent pour l'écriture du paquet $P_3$, le mot de nombre de paquet étant alors égal à "11100000" tant que la lecture du premier paquet $P_1$ n'est pas terminée.

On suppose par exemple que la fin de la lecture du premier paquet $P_1$ intervient au cours de l'écriture du paquet $P_3$, sachant que les paquets les plus fréquents sont des paquets de signalisation avant une longueur minimale de 6x8 = 48 bits et que, comme déjà dit, le trafic dans les canaux est faible.

En réponse à une impulsion FNPL fournie par le circuit 6, signalant la transmission du dernier bit lu "0" du drapeau de fermeture du paquet $P_1$, les sorties 5354 et 535⁻ du circuit logique 535 produisent un signal de commande pour lire le mot "11100000" dans la cellule de rang k dans la mémoire 531, et une impulsion D⁻ pour un décalage de ce mot vers la gauche dans le circuit 523 afin d'écrire le mot "11000000". Aucun changement n'intervient dans la mémoire d'adresse de cellule 521. Le paquet $P_3$ continue à être écrit, pendant que le paquet $P_2$ est lu. La fin de la lecture du paquet $P_2$ provoque comme précédemment, le retrait d'un "1" dans le mot de nombre de paquet, pour devenir égal à "10000000".

De même, la fin de la lecture du paquet $P_3$ signalée par une impulsion FNPL provoque la modification du mot de nombre de paquet en "00000000". Ce dernier mot est alors détecté par le comparateur 536 dont le signal de sortie PAP passe à "1" et y demeure pendant tous les intervalles $IT_k$ des trames de la voie MUXS jusqu'à l'écriture d'un prochain autre paquet dans la sous-mémoire $50_k$. Pendant ces derniers intervalles $IT_k$, comme pendant les intervalles $IT_k$ au cours desquels les paquets $P_1$, $P_2$ et $P_3$ sont lus, des bits "1" sont écrits dans les cellules correspondantes, afin d'être lus pendant d'éventuels intervalles de silence du canal $CS_k$ au cours du prochain cycle de lecture de la mémoire $50_k$. En outre, le passage à l'état "1" du signal PAP permet d'écrire les adresses de cellule "en avance d'un octet" (NB + - (NO + 1)) fournies par le multiplexeur 524, dans la cellule de rang k de la mémoire 521 et ainsi de mettre à jour continuellement celle-ci en attente du prochain paquet destiné au canal $CS_k$.

Bien que l'invention ait été décrite en référence à une réalisation préférée, l'objet de la présente demande n'est aucunement limité à cette réalisation. En particulier, des valeurs numériques indiquées ci-dessus pourraient être déduites d'autres en vue de multiplexer des canaux entrants et transmettre des canaux sortants ayant des débits égaux à 32, 48 ou 64 kbit/s par exemple afin d'obtenir un débit des voies multiplex MUXE et MUXS égal à 1024, 1536 ou 2048 kbit/s et un débit des voies de paquet sortante VPS et entrante VPE inférieur ou égal au débit des voies multiplex. Par ailleurs, à la place des bits à l'état prédéterminé "1" inclus dans les intervalles de silence entre des paquets dans chaque canal peuvent être prévus des drapeaux "01111110" convenablement cadrés, au moyen d'un circuit modifié 6 analogue au circuit 2.

**Revendications**

1. Equipement de multiplexage (EM) relié à une pluralité de canaux numériques entrants ($CE_0$ à $CE_{K-1}$) ayant un même débit faible (d) convoyant chacun des paquets de longueurs différentes pour retransmettre en série les paquets dans une voie numérique sortante (VPS), caractérisé en ce qu'il comprend des moyens (MC) pour multiplexer à division du temps les canaux entrants ($CE_0$ à $CE_{K-1}$) par groupes de bits en nombre prédéterminé (octets) respectivement dans des intervalles de temps de trames ($IT_0$ à $IT_{K-1}$) d'une voie multiplex (MUXE) ayant un débit élevé (D = K x d), et des moyens (MP) pour regrouper consécutivement les groupes de bits de chaque paquet transmis par la voie multiplex en vue de transmettre en série les paquets regroupés dans la voie sortante (VPS) selon l'ordre chronologique des paquets transmis dans la voie multiplex (MUXE).

2. Equipement de multiplexage conforme à la revendication 1, caractérisé en ce que les moyens pour regrouper (MP) comprennent des premiers moyens (1) reliés à la voie multiplex (MUXE) pour détecter les débuts et les fins des paquets transmis dans les canaux entrants ($CE_0$ à $CE_{K-1}$) multiplexés dans la voie multiplex (MUXE), des moyens (30) pour mémoriser les données des canaux entrants ($CE_0$ à $CE_{K-1}$) transmis par la voie multiplex (MUXE), des moyens (BT) synchrones avec la fréquence de bit (w) de la voie multiplex pour écrire systématiquement les données des canaux entrants dans les moyens pour mémoriser (30) au fur et à mesure de leur transmission dans la voie multiplex, et des moyens (32,33,34) synchrones avec la fréquence de bit (w/2) de la voie sortante (VPS) pour lire sélectivement chaque paquet regroupé parmi les données écrites dans les moyens pour mémoriser (30) en fonction des début et fin détectés du paquet regroupé, afin de transmettre en série le paquet regroupé lu dans la voie sortante (VPS).

3. Equipement de multiplexage conforme à la revendication 2, caractérisé en ce que les moyens pour mémoriser (30) comprennent autant de sous-mémoires ($30_0$ à $30_{K-1}$) que de canaux entrants ($CE_0$ à $CE_{K-1}$), lesdites sous-mémoires mémorisant les paquets transmis respectivement par lesdits canaux entrants.

4. Equipement de multiplexage conforme à la revendication 3, caractérisé en ce que chaque sous-mémoire ($30_0$ à $30_{K-1}$) comporte des cel-

lules à un bit en nombre supérieur à une longueur maximale (256 octets) d'un paquet.

5. Equipement de multiplexage conforme à la revendication 3 ou 4, caractérisé en ce que les moyens pour écrire (BT) adressent respectivement en écriture à la fréquence de trame de la voie multiplex (MUXE) par groupe de cellules d'un bit dans chaque sous-mémoire, lesdites sous-mémoires ($30_0$ à $30_{K-1}$) selon l'ordre chronologique des intervalles de temps ($IT_0$ à $IT_{K-1}$) assignés aux canaux multiplexés dans la voie multiplex (MUXE), et à la fréquence de bit (w) de la voie multiplex, les cellules de chacun des groupes de cellules.

6. Equipement de multiplexage conforme à l'une quelconque des revendications 2 à 5, caractérisé en ce que les moyens pour lire (32,33,34) comprennent une première mémoire (34) pour mémoriser des adresses (NB + NO) de cellules dans les moyens pour mémoriser (30) ayant mémorisé des bits aux débuts de paquets écrits, fournies par les moyens pour écrire (BT) en réponse aux débuts détectés (DBP) des paquets écrits, et des moyens (32,33) pour établir des adresses de lecture de toutes les cellules dans les moyens pour mémoriser (30) ayant mémorisé complètement un paquet écrit en fonction de l'adresse de la cellule mémorisant le bit du début du paquet, après la détection de la fin du paquet (FNP).

7. Equipement de multiplexage conforme à la revendication 6, caractérisé en ce que les moyens pour établir comprennent une seconde mémoire (32) reliée à la première mémoire (32) pour mémoriser les adresses (NCE + NB + NO) de cellules dans les moyens pour mémoriser (30) ayant mémorisé des bits des débuts de paquets complètement écrits et non encore lus dans les moyens pour mémoriser (30), les première et seconde mémoires (34,32) étant respectivement lues et écrites simultanément en réponse aux fins détectées de paquets écrits (FNP), et un compteur (33) qui est incrémenté à la fréquence de bit (w/2) de la voie sortant (VPS) et qui est chargé successivement par les adresses de cellules des bits des débuts des paquets complètement écrits respectivement après les détections de sfins de paquets, pour établir consécutivement les adresses de lecture de cellules relatives à chaque paquet écrit.

8. Equipement de multiplexage conforme à la revendication 7, caractérisé en ce que la seconde mémoire est une file d'attente (FIFO,32).

9. Equipement de multiplexage conforme à l'une quelconque des revendications 2 à 8, caractérisé en ce que les moyens pour détecter les débuts et les fins des paquets (1) comprennent une mémoire (10) adressée à la fréquence des groupes de bits dans la voie multiplex (MUXE) et écrite et lue à la fréquence de bit (w) de la voie multiplex par les moyens pour écrire (BT) pour mémoriser des états (11S) des canaux entrants ($CE_0$ à $CE_{K-1}$) en fonction des groupes de bits, ces états indiquant notamment l'inactivité d'un canal entre paquets, les débuts et fins des paquets et des données de paquets transmis dans la voie multiplex, et des moyens (11) pour analyser chaque bit de chaque canal entrant dans la voie multiplex (MUXE) par rapport à l'état mémorisé lu (10S) correspondant au bit précédent dans le canal entrant afin d'établir des signaux de début de paquet (DBP) et des signaux de fin de paquet (FNP) délivrés aux moyens pour lire (32,33,34) et un nouvel état (11S) du canal à écrire dans ladite mémoire (10).

10. Equipement de multiplexage conforme à l'une quelconque des revendications 2 à 9, caractérisé en ce qu'il comprend des moyens (2) reliés aux moyens pour mémoriser (30) pour transmettre des drapeaux ("01111110") dans la voie sortante (VPS), intercalés entre les paquets lus dans les moyens pour mémoriser et transmis dans la voie sortante.

11. Equipement de multiplexage conforme à la revendication 10, caractérisé en ce que les moyens pour transmettre des drapeaux comprennent des moyens (22) pour détecter les débuts et les fins des paquets lus, des moyens (23) pour produire continûment des drapeaux, et des moyens (21) reliés aux moyens pour mémoriser (30) et aux moyens pour produire des drapeaux (23) et commandés par les moyens pour détecter les débuts et les fins des paquets lus (22) pour transmettre un paquet lu dans la voie sortante (VPS) en réponse au début détecté du paquet lu (PPL = 1), et des drapeaux en réponse aux fins détectées des paquets lus (PPL = 0).

12. Equipement de multiplexage conforme à l'une quelconque des revendications 6 à 8 et à la revendication 10 ou 11, caractérisé en ce que les moyens pour transmettre des drapeaux (2) délivrent un signal d'invitation de paquet-à-transmettre (PAT) en réponse à la fin (dernier bit "0") d'un drapeau transmis dans la voie sortante (VPS) afin de commander dans les moyens pour établir (32,33) l'établissement des adresses de lecture de cellules relatives à un prochain paquet écrit à lire et à transmettre immédiatement après un drapeau.

13. Equipement de multiplexage conforme à l'une quelconque des revendications 1 à 12, caractérisé en ce que les début et fin de chaque paquet dans les canaux entrants ($CE_0$ à $CE_{K-1}$) sont constitués par les premier et dernier bit ("0") de drapeaux d'ouverture et de fermeture ("01111110") encadrant les données du paquet, respectivement, et en ce que chaque paquet est écrit et lu avec ses drapeaux d'ouverture et de fermeture dans les moyens pour regrouper (MP).

14. Equipement de multiplexage conforme à l'une quelconque des revendications 1 à 13, caractérisé en ce que la voie de paquet sortante (VPS) a un débit égal ou inférieur (DV = 256 kbit/s) au débit (D = 512 kbit/s) de la voie multiplexe (MUXE).

15. Equipement de démultiplexage (ED) relié à une voie numérique entrante (VPE) convoyant en série des paquets de longueurs différentes destinés respectivement à des canaux numériques sortants ($CS_0$ à $CS_{K-1}$) ayant un même débit faible (d) pour retransmettre les paquets respectivement dans les canaux sortants, caractérisé en ce qu'il comprend des moyens (DP) pour séparer les paquets dans la voie entrante (VPE) en fonction de leur destination afin de délivrer les paquets destinés aux canaux sous la forme de groupes ayant des bits en nombre prédéterminé (octets) respectivement pendant des intervalles de temps de trames d'une voie multiplex (MUXS) ayant un débit élevé (D = K x d), et des moyens (DC) pour démultiplexer à division du temps la voie multiplex (MUXS) en lesdits canaux sortants ($CS_0$ à $CS_{K-1}$).

16. Equipement de démultiplexage conforme à la revendication 15, caractérisé en ce que les moyens pour séparer (DP) comprennent des premiers moyens (4) reliés à la voie entrante (VPE) pour détecter les débuts (DBPE) et les fins (FNPE) des paquets transmis dans la voie entrante (VPE), des moyens (50) pour mémoriser au moins les paquets transmis par la voie entrante (VPE), des moyens (52,53,6) synchrones avec la fréquence de bit (w/2) de la voie entrante pour écrire les paquets dans les moyens pour mémoriser (50) au fur et à mesure de leur transmission par la voie entrante, et des moyens (BT) synchrones avec la fréquence de bit (w) de la voie multiplex (MUXS) pour lire systématiquement les moyens pour mémoriser (50) à raison d'un groupe de bits (octets) d'un paquet écrit pendant l'intervalle de temps respectif ($IT_0$ à $IT_{K-1}$) de la voie multiplex (MUXS).

17. Equipement de démultiplexage conforme à la revendication 16, caractérisé en ce que les moyens pour mémoriser (50) comprennent autant de sous-mémoires ($50_0$ à $50_{K-1}$) que de canaux sortants ($CS_0$ à $CS_{K-1}$), lesdites sous-mémoires mémorisant les paquets transmis par la voie entrante (VPE) respectivement à destination desdits canaux sortants ($CS_0$ à $CS_{K-1}$).

18. Equipement de démultiplexage conforme à la revendication 17, caractérisé en ce que chaque sous-mémoire ($50_0$ à $50_{K-1}$) comporte des cellules à un bit en nombre supérieur à une longueur maximale (256 octets) d'un paquet.

19. Equipement de démultiplexage conforme à la revendication 17 ou 18, caractérisé en ce que les moyens pour lire (BT) adressent en lecture à la fréquence de trame de la voie multiplex (MUXS), par groupe de cellules d'un bit dans chaque sous-mémoire, lesdites sous-mémoires ($50_0$ à $50_{K-1}$) selon l'ordre chronologique des intervalles de temps ($IT_0$ à $IT_{K-1}$) assignés aux canaux multiplexés dans la voie multiplex (MUXS), et à la fréquence de bit (w) de la voie multiplex, les cellules de chacun des groupes de cellules.

20. Equipement de démultiplexage conforme à l'une quelconque des revendications 16 à 19, caractérisé en ce que les moyens pour écrire (52,53,6) comprennent des moyens (52) pour établir des adresses d'écriture de cellules à un bit dans les moyens pour mémoriser (50) destinées à mémoriser temporairement un paquet transmis par la voie entrante (VPE) en fonction d'une adresse de cellule destinée à mémoriser un bit ("0") au début du paquet et déduite d'une adresse de lecture (NB + (NO + 1)) délivrée par les moyens pour lire (BT) relative à une cellule lue antérieurement à l'écriture du paquet, de préférence lue pendant la trame précédente de la voie multiplex (MUXS).

21. Equipement de démultiplexage conforme à la revendication 20, caractérisé en ce que les moyens pour établir (52) comprennent une première mémoire (521) pour mémoriser des adresses de cellules dans moyens pour mémoriser (50) destinées à mémoriser les bits de "début" de prochains paquets à écrire destinés respectivement aux canaux sortants ($CS_0$ à $CS_{K-1}$), et un compteur (520) qui est incrémenté à la fréquence de bit (w/2) de la voie entrante (VPE) et qui est chargé par l'adresse de la cellule dans la première mémoire (521) destinée à mémoriser le bit d'un début de paquet transmis par la voie entrante (VPE) en réponse à la détection du début de paquet (DBPE), pour établir consécutivement les adresses d'écriture de cellules mémorisant le paquet, et des moyens (523,524) pour écrire sélectivement dans la première mémoire (521), en tant qu'adresse de cellule mémorisant le bit de début d'un paquet destiné à un canal sortant, une adresse de cellule (NB + (NO + 1)) fournie par les moyens pour lire (BT) et devant être lue après la cellule en cours de lecture relative au canal, de préférence après une durée d'une trame de la voie multiplex (MUXS) succédant à l'instant de lecture de ladite cellule en cours de lecture, lorsque les moyens pour mémoriser (50) ne contiennent aucun paquet destiné audit canal (PAP = 1), et l'adresse de cellule (520S) ayant mémorisé la fin du paquet précédemment écrit destiné audit canal et fournie par ledit compteur (520), lorsque ledit paquet précédemment écrit n'est pas complètement lu (PAP = 0).

22. Equipement de démultiplexage conforme à la revendication 20 ou 21, caractérisé en ce que les moyens pour écrire (52,53,6) comprennent des seconds moyens (6) reliés à la voie multiplex (MUXS) pour détecter la fin (FNPL) de chaque paquet lu dans les moyens pour mémoriser (50) et transmis dans la voie multiplex, et des moyens (53) commandés par les premier et second moyens pour détecter (4,6) pour compter et décompter les paquets en cours d'écriture, écrits complètement et en cours de lecture dans les moyens pour mémoriser (50) pour chacun des canaux sortants ($CS_0$ à $CS_{K-1}$), afin de sélectionner l'adresse de cellule destinée à mémoriser le bit de début ("0") de chaque paquet.

23. Equipement de démultiplexage conforme à la revendication 22, caractérisé en ce que les moyens pour compter et décompter (53) comprennent une second mémoire (531) pour mémoriser les nombres de paquets en cours d'écriture, écrits complètement et en cours de lecture respectivement pour les canaux sortants ($CS_0$ à $CS_{K-1}$), des moyens (533) pour augmenter et diminuer d'une unité le nombre de paquets pour un canal respectif en réponse au début (DBPE) d'un paquet dudit canal écrit dans les moyens pour mémoriser (50), signalé par les premiers moyens pour détecter (4), et en réponse à la fin (FNPL) d'un paquet dudit canal lu dans les moyens pour mémoriser (50), signalée par les seconds moyens pour détecter (6), respectivement.

24. Equipement de démultiplexage conforme aux revendications 21 et 23, caractérisé en ce que les moyens pour compter et décompter (53) comprennent des moyens (536,537,538) pour autoriser dans la première mémoire (521) et pour chaque canal sortant ($CS_0$ à $CS_{K-1}$), une lecture de l'adresse de la cellule destinée à mémoriser le bit de début d'un paquet en réponse à la détection du début (DBPE = 1) de ce paquet écrit, une écriture de l'adresse de cellule fournie par les moyens pour lire (BT), cellule devant être lue après la cellule en cours de lecture relative au canal, lorsque le nombre de paquets du canal (PAP = 1) est nul, et une écriture de l'adresse de cellule fournie par ledit compteur (520) en réponse à la détection de la fin (FNPE = 1) d'un paquet écrit du canal.

25. Equipement conforme à l'une quelconque des revendications 16 à 24, caractérisé en ce que les moyens pour séparer (DP) comprennent des moyens (501 à 504) pour écrire systématiquement un bit ayant un état prédéterminé ("1") après la lecture de chacune de cellules à un bit dans les moyens pour mémoriser ($50_0$ à $50_{K-1}$), l'écriture du bit à l'état prédéterminé n'étant effacée que par l'écriture d'un bit de paquet dans ladite cellule sous la commande (PPE) des premiers moyens pour détecter (2), afin de transmettre des bits à l'état prédéterminé ("1") entre des paquets lus et transmis dans chacun des canaux ($CS_0$ à $CS_{K-1}$).

26. Equipement de démultiplexage conforme à l'une quelconque des revendications 15 à 25, caractérisé en ce que les début et fin de chaque paquet dans la voie entrante (VPE) et dans les canaux sortants ($CS_0$ à $CS_{K-1}$) sont constitués par des premier et dernier bit ("0") de drapeaux d'ouverture et de fermeture ("01111110") encadrant les données du paquet, et en ce que chaque paquet est écrit et lu avec ses drapeaux d'ouverture et de fermeture dans les moyens pour séparer (DP).

27. Equipement de démultiplexage conforme à l'une quelconque des revendications 15 à 26, caractérisé en ce que la voie de paquet entrante (VPE) a un débit égal ou inférieur (DV = 256 kbit/s) au débit (D = 512 kbit/s) de la voie multiplex (MUXS).

**Claims**

1. A multiplexor (EM) connected to a number of incoming digital channels ($CE_0$ to $CE_{K-1}$) having the same low bit rate (d) and each conveying packets of different lengths for serial retransmission to an outgoing digital trunk (VPS), characterised in that it comprises means (MC) for time division multiplexing the incoming channels ($CE_0$ to $CE_{K-1}$) by groups consisting of a predetermined number of bits (octets) in respective time slots ($IT_0$ to $IT_{K-1}$) of a multiplex trunk (MUXE) having a high transmission rate (D = K x d), and means (MP) for consecutively regrouping the bit groups of each packet transmitted by the multiplex trunk in order to transmit the regrouped packets in series to the outgoing trunk (VPS) in the chronological order of the packets transmitted in the multiplex trunk (MUXE).

2. Equipment according to claim 1, characterised in that the regrouping means (MP) comprise first means (1) connected to the multiplex trunk (MUXE) for detecting the starts and ends of the packets transmitted in the incoming channels ($CE_O$ to $CE_{K-1}$) and multiplexed in the multiplex trunk (MUXE), means (30) for storing the data of the incoming channels ($CE_0$ to $CE_{K-1}$) transmitted over the multiplex trunk (MUXE), means (BT) synchronous with the bit frequency (w) of the multiplex trunk for systematically writing the incoming channel data into the storage means (30) in accordance with the their transmission in the multiplex trunk, and means (32 - 34) synchronous with the bit frequency (w/2) of the outgoing trunk (VPS) for selectively reading each regrouped packet among the data written into the storage means (30) in dependence upon the detected start and end of the regrouped packet in order to transmit the same serially in the outgoing trunk (VPS).

3. Equipment according to claim 2, characterised in that the storage means (30) comprise substores ($30_O$ to $30_{K-1}$) to the same number as there are incoming channels ($CE_0$ to $CE_{K-1}$), the substores storing the packets transmitted by the respective incoming channels.

4. Equipment according to claim 3, characterised in that each substore ($30_0$ to $30_{K-1}$) comprises one-bit cells to a greater number than a maximum length (256 octets) of one packet.

5. Equipment according to claim 3 or 4, characterised in that the write-in means (BT) address: the substores ($30_0$ to $30_{K-1}$) for write-in at the frame frequency of the multiplex trunk (MUXE) per group of one-bit cells in each substore in the chronological order of the time slots ($IT_0$ to $IT_{K-1}$) allotted to the multiplexed channels in the multiplex trunk (MUXE); and the cells of each of the cell groups at the bit frequency (w) of the multiplex trunk.

6. Equipment according to any of claims 2 to 5, characterised in that the read-out means (32 - 34) comprise: a first store (34) for storing addresses (NB + NO) of cells in the storage means (30) which have memorised bits at the starts of written-in packets, such addresses having been supplied by the write-in means (BT) in response to the detected starts (DBP) of the written-in packets; and means (32, 33) for preparing read-out addresses of all those cells in the storage means (30) which have completely stored a written-in packet in dependence upon the address of the cell storing the packet start bit after detection of the end of the packet (FNP).

7. Equipment according to claim 6, characterised in that the address-preparing means comprise: a second store (34) connected to the first store (33) for stworing the addresses (NCE + NB + NO) of such cells in the storage means (30) as have stored fully written packet start bits not yet read in the storage means (30), the first and second stores (34, 32) being respectively read and written into simultaneously in response to the detected ends (FNP of written-in packets; and a counter (33) which is incremented at the bit frequency (w/2) of the outgoing trunk (VPS) and which is loaded consecutively with the cell addresses of the start bits of the completely written-in packets respectively after detections of the packet ends to consecutively prepare the read-out addresses of cells for each written-in packet.

8. Equipment according to claim 7, characterised in that the second store is a FIFO file (FIFO, 32).

9. Equipment according to any of claims 2 to 8, characterised in that the means for detecting the starts and ends of the packets (1) comprise: a store (10) addressed at the frequency of the bit groups in she multiplex trunk (MUXE) and written-in and read-out at the bit frequency (w) of the multiplex trunk by the write-in means (BT) for storing states (115) of the incoming

channels ($CE_0$ to $CE_{K-1}$) in dependence upon the bit groups, such states indicating inter alia the inactivity of a channel between packets, the starts and ends of the packets and packet data transmitted over the multiplex trunk; and means (11) for analysing each bit of each incoming channel in the multiplex trunk (MUXE) relatively to the read-out stored state (IOS) corresponding to the previous bit in the incoming channel in order to prepare packet start signals (DBP) and packet end signals (FNP) output to the read-out means (32 - 34) and a new state (11S) of the channel to be written into the store (10).

10. Equipment according to any of claims 2 to 9, characterised in that it comprises means (2) connected to the storage means (30) for transmitting flags ("01111110") in the outgoing channel (VPS) interleaved between the packets read-out in the storage means and transmitted in the outgoing trunk.

11. Equipment according to claim 10, characterised in that the flag-transmitting means comprise: means (22) for detecting the starts and the ends of the read-out packets; means (23) for continuously producing flags; and means (21) which are connected to the storage means (30) and to the flag-producing means (23) and which are controlled by the means for detecting the starts and ends of read-out packets (22)for transmitting a read-out packet in the outgoing trunk (VPS) in response to detection of the start of the read-out packet (PPL = 1) and of the flags in response to the detected ends of the read-out packets (PPL = O).

12. Equipment according to any of claims 6 to 8 and to claim 10 or 11, characterised in that the means for transmitting flags (2) output a packet to-be-transmitted invitation signal (PAT) in response to the end (last "O" bit) of a flag transmitted over the outgoing trunk (VPS) in order to instruct the preparing means (32, 33) to prepare the read-out addresses of cells relating to a subsequent written-in packet to be read out and to be transmitted immediately after a flag.

13. Equipment according to any of claims 1 to 12, characterised in that the start and end of each packet in the incoming channels ($CE_0$ to $CE_{K-1}$) are the first and last bit ("O") of opening and closing flags ("01111110") framing the packet data respectively and each packet is written in and read out with its opening and closing flags in the regrouping means (MP).

14. Equipment according to any of claims 1 to 13, characterised in that the outgoing packet trunk (VPS) has a bit rate DV = 256 kbit/s at most equal to the bit rate D = 512 kbit/s of the multiplex trunk (MUXE).

15. Demultiplexing equipment (ED) connected to an incoming digital trunk (VPE) conveying in series packets of different lengths for respective outgoing digital channels ($CS_0$ to $CE_{K-1}$) having the same low bit rate (d) for retransmitting the packets over respective outgoing channels, characterised in that it comprises means (DP) for separating the packets in the incoming trunk (VPE) in dependence upon their destination in order to deliver the packets for the channels in the form of groups having bits to a predetermined number (octets) respectively during frame time slots of a multiplex channel (MUXS) having a high bit rate (D = K x d) and means (DC) for time division demultiplexing the multiplex trunk (MUXS) into the outgoing channels ($CS_0$ to $CE_{K-1}$).

16. Demultiplexing equipment according to claim 15, characterised in that the separating means (DP) comprise first means (4) connected to the incoming trunk (VPE) for detecting the starts (DBPE) and the ends (FNPE) of the packets transmitted over the incoming trunk (VPE), means (50) for storing at least the packets transmitted over the latter trunk, means (52, 53, 6) synchronous with the bit frequency (w/2) of the incoming trunk to write the packets into the storage means (50) according as they are transmitted over the incoming trunk, and means (BT) synchronous with the bit frequency (w) of the multiplex trunk (MUXS) for systematically reading the storage means (50) at the rate of one group of bits (octets) of a packet written in during the respective time slot ($IT_0$ to $IT_{K-1}$) of the multiplex trunk (MUXS).

17. Demultiplexing equipment according to claim 16, characterised in that the storage means (50) comprise substores ($50_0$ to $50_{K-1}$) to the number of outgoing channels ($CS_0$ to $CE_{K-1}$), the substores storing the packets transmitted over the incoming trunk (VPE) which are respectively destined for the outgoing channels ($CS_0$ to $CS_{K-1}$).

18. Demultiplexing equipment according to claim 17, characterised in that each substore ($50_0$ to $50_{K-1}$) comprises one-bit cells to a greater number than a maximum length (256 octets) of a packet.

**19.** Equipment according to claim 17 or 18, characterised in that the read-out means (BT) read out adderesses, at the frame frequency of the multiplex trunk (MUXS) per group of one-bit cells in each substore, to the substores ($50_0$ to $50_{K-1}$) in the chronological order of the time slots ($IT_0$ to $IT_{K-1}$) allotted to the multiplexed channels in the multiplex trunk (MUXS) and, at the bit frequency (w) of the multiplex trunk, to the cells of each of the cell groups.

**20.** Equipment according to any of claims 16 to 19, characterised in that the write-in means (52, 53, 6) comprise means (52) for preparing one-bit cell write-in addresses in the storage means (50) for temporarily storing a packet transmitted over the incoming trunk (VPE) in dependence upon a cell address for storing a bit ("O") at the start of the packet and deduced from a read address (NB + (NO + 1)) delivered by the reading means (BT) relative to a cell read prior to the writing-in of the packet and preferably read during the previous frame of the multiplex trunk (MUXS).

**21.** Equipment according to claim 20, characterised in that the preparing means (52) comprise: a first store (521) for storing cell addresses in storage means (50) for storing the "start" bits of subsequent packets to be written-in and for the respective outgoing channels ($CS_0$ to $Cs_{K-1}$); a counter (520) which is stepped on at the bit frequency (w/2) of the incoming trunk (VPE) and which is loaded with the address of the cell in the first store (521) for storing the bit of a packet start transmitted over the incoming trunk (VPE) in response to detection of the packet start (DBPE), thereafter to prepare the write-in addresses of cells storing the packet; and means (523, 524) for selectively writing into the first store (521) as cell address storing the start bit of a packet for an outgoing channel: a cell address (NB + (NO + 1)) supplied by the reading means (DT) and having to be read after the cell being read in respect of the channel, preferably after a time interval of one frame of the multiplex trunk (MUXS) following the instant of read-out of the cell during read-out when the storage means (50) contain no packet for the channel (PAP = 1); and the cell address (520S) having stored the previously written-in packet end for such channel and supplied by the counter (520) when the previously written-in packet is not completely read (PAP = 0).

**22.** Equipment according to claim 20 or 21, characterised in that the write-in means (52, 53, 6) comprise: second means (6) connected to the multiplex trunk (MUXS) for detecting the end (FNPL) of each packet read in the storage means (50) and transmitted over the multiplex trunk; and means (53) controlled by the first and second detecting means (4, 6) for forwards and backwards counting of the packets being written-in, completely written in and being read out in the storage means (50) for each of the outgoing channels ($CS_0$ to $CS_{K-1}$) in order to select the cell address for storing the start bit ("O") of each packet.

**23.** Equipment according to claim 22, characterised in that the forward and backwards counting means (53) comprise: a second store (531) for storing the numbers of packets being written-in, fully written-in and being read out respectively for the outgoing channels ($CS_0$ to $CS_{K-1}$); means (533) for increasing and decreasing by one unit the number of packets for a respective channel in response to the start (DBPE) of a packet of the channel written into the storage means (50) and indicated by the first detecting means (4) and in response to the end (FNPL) of a packet of the channel read in the storage means (50), such end being signalled by the second detecting means (6), respectively.

**24.** Equipment according to claims 21 and 23, characterised in that the forwards and backwards counting means (53) comprise means (536, 537, 538) for authorising in the first store (521) and for each outgoing channel ($CS_0$ to $CS_{K-1}$) a read-out of the address of the cell for storing the start bit of a packet in response to the detection of the start (DBPE = 1) of this written-in packet, a write-in of the cell address applied by the reading means (BT), such cell having to be read after the cell being read relatively to the channel when the number of packets of the channel (PAP = 1) is zero, and the write-in of the cell address supplied by the counter (520) in response to detection of the end (FNPE = 1) of a written-in packet of the channel.

**25.** Equipment according to any of claims 16 to 24, characterised in that the separating means (DP) comprise means (501 to 504) for systematically writing in a bit having a predetermined state ("1") after the read-out of each one-bit cell in the storage means ($50_0$ to $50_{K-1}$), the write-in of the bit in the predetermined state being erased only by the writing of a packet bit into such cell under the control (PPE) of the first detecting means (2) in order to transmit bits in the predetermined state ("1") between the packets read-out and transmitted in each of the channels ($CS_{0 \text{ to } CSK-1}$).

26. Equipment according to any of claims 15 to 25, characterised in that the start and end of each packet in the incoming trunk (VPE) and in the outgoing channels ($CS_0$ to $CS_{K-1}$) are embodied by the first and last bit ("O") of opening and closing flags ("01111110") framing the packet data, and each packet is written in and read out with its opening and closing flags in the separating means (DP).

27. Equipment according to any of claims 15 to 26, characterised in that the incoming packet trunk (VPE) has a transmission rate (DV = 256 kbit/s) equal to or less than the transmission rate (D = 512 kbit/s) of the multiplex trunk (MUXS).

**Patentansprüche**

1. Einrichtungen zur Multiplexierung (EM), die mit einer Vielzahl von digitalen Eingangskanälen ($CE_0$ bis $CE_{K-1}$) verbunden sind und die mit einer gleichen niedrigen Rate (d) jedes der Pakete unterschiedlicher Länge führen, um die Pakete in Serie in einer digitalen Ausgangsleitung (VPS) rückzuübertragen, dadurch gekennzeichnet, daß sie Einrichtungen (MC) zum Multiplexen der Eingangskanäle ($CE_0$ bis $CE_{K-1}$) durch Zeitteilung in Gruppen einer vorgegebenen Zahl von Bits (octets) in den Intervallen der Rasterzeit ($IT_0$ bis $IT_{K-1}$) einer Multiplexleitung (MUXE) mit einer hohen Übertragungsrate (D = K x d), und Einrichtungen (MP) zum nacheinander Neugruppieren der Bitgruppen jedes der durch die Multiplexleitung übertragenen Pakete zur seriellen Übertragung der neugruppierten Pakete in der Ausgangsleitung (VPS) nach der chronologischen Ordnung der in der Multiplexleitung (MUXE) übertragenen Pakete, aufweisen.

2. Einrichtungen zur Multiplexierung nach Anspruch 1, dadurch gekennzeichnet, daß die Einrichtungen zur Neugruppierung (MP) erste mit der Multiplexleitung (MUXE) verbundene Einrichtungen (1) zur Entdeckung der Anfänge und der Enden der in den Eingangskanalen ($CE_0$ bis $CE_{K-1}$) übertragenen Pakete und in der Multiplexleitung (MUXE) gemultiplexten Pakete, Einrichtungen (30) zur Speicherung der durch die Multiplexleitung (MUXE) übertragenen Daten der Eingangskanäle ($CE_0$ bis $CE_{K-1}$), zu der Bit-Frequenz (w) der Multiplexleitung synchrone Einrichtungen (BT) zum systematischen Einschreiben der Daten der Eingangskanäle in die Speichereinrichtungen (30) je nach ihrer Übertragung in der Multiplexleitung, und mit der Bit-Frequenz (w/2) der Ausgangsleitung (VPS) synchrone Einrichtungen (32, 33, 34) zum ausgewählten Lesen jedes neugruppierten Paketes aus den in die Speichereinrichtungen (30) geschriebenen Daten entsprechend dem entdeckten Anfang und Ende des neugruppierten Pakets, um das ausgelesene neugruppierte Paket in der Ausgangsleitung (VPS) seriell zu übertragen, aufweisen.

3. Einrichtungen zur Multiplexierung nach Anspruch 2, dadurch gekennzeichnet, daß die Speichereinrichtungen (30) ebenso viele Teilspeicher ($30_0$ bis $30_{K-1}$) wie Eingangskanäle ($CE_0$ bis $CE_{K-1}$) aufweisen, wobei die Teilspeicher die jeweils durch die Eingangskanäle übertragenen Pakete speichern.

4. Einrichtungen zur Multiplexierung nach Anspruch 3, dadurch gekennzeichnet, daß jeder Teilspeicher ($30_0$ bis $30_{K-1}$) Ein-Bit-Zellen in größerer Zahl bis zu einer maximalen Länge (256 octets) eines Pakets aufweist.

5. Einrichtungen zur Multiplexierung nach Anspruch 3 oder 4, dadurch gekennzeichnet, daß die Einrichtungen zum Schreiben (RT) jeweils beim Schreiben in jedem Teilspeicher die Teilspeicher ($30_0$ bis $30_{K-1}$) in chronologischer Ordnung der Zeitintervalle ($IT_0$ bis $IT_{K-1}$), die den gemultiplexten Kanälen in der Multiplexleitung (MUXE) zugewiesen sind, mit der Rasterfrequenz der Multiplexleitung (MUXE) in Gruppen von Ein-Bit-Zellen adressieren und mit der Bit-Frequenz (w) der Multiplexleitung die Zellen jeder der Gruppen von Zellen adressieren.

6. Einrichtungen zur Multiplexierung nach einem der Ansprüche 2 bis 5, dadurch gekennzeichnet, daß die Einrichtungen zum Lesen (32, 33, 34) einen ersten Speicher (34) zum Abspeichern der Zellenadressen (NB + NO) in den Speichereinrichtungen (30), die die Bits mit den Anfängen der eingeschriebenen Pakete, die von den Einrichtungen zum Schreiben (BT) infolge der entdeckten Anfänge (DBP) der geschriebenen Pakete geliefert werden, gespeichert haben, und Einrichtungen (32, 33) zum Aufstellen der Leseadressen aller Zellen in den Speichereinrichtungen (30), die ein geschriebenes Paket als Funktion der Adresse der Zelle, die das Anfangsbit des Pakets gespeichert hat, nach der Entdeckung des Endes des Pakets (FNP) vollständig gespeichert haben, aufweisen.

7. Einrichtungen zur Multiplexierung nach Anspruch 6, dadurch gekennzeichnet, daß die Einrichtungen zum Aufstellen einen zweiten Speicher (32), der mit dem ersten Speicher (32) verbunden ist, zur Speicherung der Adressen (NCE + NB + NO) der Zellen in den Speichereinrichtungen (30), die die Anfangsbits der vollständig geschriebenen und noch nicht in die Speichereinrichtungen (30) gelesenen Pakete gespeichert haben, erste und zweite Speicher (34, 32), die jeweils simultan als Folge der entdeckten Enden der geschriebenen Pakete (FNP) gelesen und geschrieben werden, und einen Zähler (33), der mit der Bit-Frequenz (w/2) der Ausgangsleitung (VPS) erhöht wird und der sukzessive mit den Adressen der Zellen der Anfangsbits der vollständig geschriebenen Pakete nach dem Entdecken der Enden der Pakete beschickt wird, um nacheinander die Leseadressen der Zellen bezüglich jedes geschriebenen Paketes aufzustellen, aufweisen.

8. Einrichtungen zur Multiplexierung nach Anspruch 7, dadurch gekennzeichnet, daß der zweite Speicher ein Halteglied (FIFO, 32) ist.

9. Einrichtungen zur Multiplexierung nach einem der Ansprüche 2 bis 8, dadurch gekennzeichnet, daß die Einrichtungen zur Entdeckung der Anfänge und der Enden der Pakete (1) einen Speicher (10), der mit der Frequenz der Bitgruppen in der Multiplexleitung (MUXE) adressiert und mit der Bit-Frequenz (w) der Multiplexleitung durch die Einrichtungen zum Schreiben (BT) beschrieben und gelesen wird, zur Speicherung des Zustands (11S) der Eingangskanäle ($CE_0$ bis $CE_{K-1}$) als Funktion der Bitgruppen, wobei diese Zustände insbesondere die Inaktivität eines Kanals zwischen den Paketen, die Anfänge und Enden der Pakete und die Daten der in der Multiplexleitung übertragenen Pakete anzeigen, und Einrichtungen (11) zum Analysieren jedes Bits jedes Kanals, das in die Multiplexleitung (MUXE) eintritt, in bezug auf den gelesenen gespeicherten Zustand (10S) und entsprechend dem vorhergehenden Bit des eintreffenden Kanals, um Anfangssignale des Pakets (DBP) und Endsignale des Pakets (FNP) aufzustellen, die von den Einrichtungen zum Lesen (32, 33, 34) freigesetzt werden, und um einen neuen, in den Speicher (10) zu schreibenden Zustand (11S) des Kanals aufzustellen, aufweisen.

10. Einrichtungen zur Multiplexierung nach einem der Ansprüche 2 bis 9, dadurch gekennzeichnet, daß sie mit den Speichereinrichtungen (30) verbundene Einrichtungen (2) zur Übertragung von Kennungen ("01111110") in der Ausgangsleitung (VPS), die eingeschoben sind zwischen die in die Speichereinrichtungen gelesenen und in der Ausgangsleitung übertragenen Pakete, aufweisen.

11. Einrichtungen zur Multiplexierung nach Anspruch 10, dadurch gekennzeichnet, daß die Einrichtungen zur Übertragung von Kennungen Einrichtungen (22) zur Entdeckung der Anfänge und der Enden der eingelesenen Pakete, Einrichtungen (23) zur fortlaufenden Herstellung von Kennungen und mit den Speichereinrichtungen (30) und den Einrichtungen zur Herstellung der Kennungen (23) verbundene und durch die Einrichtungen zur Entdeckung der Anfänge und der Enden der eingelesenen Pakete (22) gesteuerte Einrichtungen (21) zur Übertragung eines gelesenen Pakets in die Ausgangsleitung (VPS) infolge des entdeckten Anfangs des gelesenen Pakets (PPL = 1) und zur Übertragung von Kennungen infolge der entdeckten Enden der gelesenen Pakete (PPL = 0) aufweisen.

12. Einrichtungen zur Multiplexierung nach einem der Ansprüche 6 bis 8 und nach Anspruch 10 oder 11, dadurch gekennzeichnet, daß die Einrichtungen zur Übertragung der Kennungen (2) ein Anforderungssignal für die Übertragung eines Pakets (PAT) infolge des Endes (letztes Bit "0") einer in die Ausgangsleitung (VPS) übertragenen Kennung absetzen, um in den Aufstelleinrichtungen (32, 33) die Aufstellung der Leseadressen der Zellen bezüglich eines nächsten geschriebenen Pakets, das sofort nach einer Kennung gelesen und übertragen werden soll, zu steuern.

13. Einrichtungen zur Multiplexierung nach einem der Ansprüche 1 bis 12, dadurch gekennzeichnet, daß der Anfang und das Ende jedes Pakets in den Eingangskanälen ($CE_O$ bis $CE_{K-1}$) jeweils vom ersten und letzten Bit ("0") der Eingangs- und Schlußkennungen ("01111110"), die die Daten des Pakets einrahmen, gebildet werden, und dadurch, daß jedes Paket mit seinen Eingangs- und Schlußkennungen in die Einrichtungen zur Neugruppierung (MP) geschrieben und gelesen wird.

14. Einrichtungen zur Multiplexierung nach einem der Ansprüche 1 bis 13, dadurch gekennzeichnet, daß die Ausgangspaketleitung (VPS) eine Rate aufweist, die gleich oder niedriger (DV = 256 kbit/s) als die Rate (D = 512 kbit/s) der Multiplexleitung (MUXE) ist.

15. Einrichtungen zur Demultiplexierung (ED), die mit einer digitalen Eingangsleitung (VPE) verbunden sind und die in Serie Pakete unterschiedlicher Länge, die jeweils für digitale Ausgangskanäle ($CS_0$ bis $CS_{K-1}$) bestimmt sind, führen und die eine gleiche niedrige Rate (d) zur Rückübertragung der Pakete in den Ausgangskanälen aufweisen, dadurch gekennzeichnet, daß sie Einrichtungen (DP) zum Trennen der Pakete in der Eingangsleitung (VPE) als Funktion ihrer Bestimmung aufweisen, um die für die Kanäle bestimmten Pakete in Form von Gruppen einer vorbestimmten Zahl von Bits (octets) jeweils während der Intervalle der Rasterzeit einer Multiplexleitung (MUXS) abzusetzen, die eine höhere Übertragungsrate ($D = K \times d$) aufweist, und Einrichtungen (DC) zum Demultiplexen der Multiplexleitung (MUXS) durch Zeitteilung in die Ausgangskanäle ($CS_0$ bis $CS_{K-1}$), aufweisen.

16. Einrichtungen zur Demultiplexierung nach Anspruch 15, dadurch gekennzeichnet, daß die Einrichtungen zum Trennen (DP) erste mit der Eingangsleitung (VPE) verbundene Einrichtungen (4) zum Entdecken der Anfänge (DBPE) und der Enden (FNPE) der in der Eingangsleitung (VPE) übertragenen Pakete, Einrichtungen (50) zum Speichern wenigstens der durch die Eingangsleitung (VPE) übertragenen Pakete, mit der Bit-Frequenz (w/2) der Eingangsleitung synchrone Einrichtungen (52, 53, 6) zum Schreiben der Pakete in die Speichereinrichtungen (50) je nach ihrer Übertragung durch die Eingangsleitung und mit der Bit-Frequenz (w) der Multiplexleitung (MUXS) synchrone Einrichtungen (BT) zum systematischen Lesen der Speichereinrichtungen (50) infolge einer Bitgruppe (octets) eines geschriebenen Pakets während des jeweiligen Zeitintervalls ($IT_0$ bis $IT_{K-1}$) der Multiplexleitung (MUXS) aufweisen.

17. Einrichtungen zur Demultiplexierung nach Anspruch 16, dadurch gekennzeichnet, daß die Speichereinrichtungen (50) genauso viele Teilspeicher ($50_0$ bis $50_{K-1}$) wie Ausgangskanäle ($CS_0$ bis $CS_{K-1}$) aufweisen, wobei die Teilspeicher die durch die Eingangsleitung (VPE) für die Ausgangskanäle ($CS_0$ bis $CS_{K-1}$) übertragenen Pakete speichern.

18. Einrichtungen zur Demultiplexierung nach Anspruch 17, dadurch gekennzeichnet, daß jeder Teilspeicher ($50_0$ bis $50_{K-1}$) Ein-Bit-Zellen in größerer Zahl bis zu einer maximalen Länge (256 octets) eines Pakets umfassen.

19. Einrichtungen zur Demultiplexierung nach Anspruch 17 oder 18, dadurch gekennzeichnet, daß die Einrichtungen zum Lesen (BT) beim Lesen die Teilspeicher ($50_0$ bis $50_{K-1}$) in chronologischer Ordnung der Zeitintervalle ($IT_0$ bis $IT_{K-1}$), die den gemultiplexten Kanälen in der Multiplexleitung (MUXS) zugeordnet sind, mit der Rasterfrequenz der Multiplexleitung (MUXS) in Gruppen von Ein-Bit-Zellen in jedem Teilspeicher adressieren und mit der Bit-Frequenz (w) der Multiplexleitung die Zellen jeder der Zellgruppen adressieren.

20. Einrichtungen zur Demultiplexierung nach einem der Ansprüche 16 bis 19, dadurch gekennzeichnet, daß die Einrichtungen zum Schreiben (52, 53, 6) Einrichtungen (52) zum Aufstellen der Schreibadressen der Ein-Bit-Zellen in den Speichereinrichtungen (50) aufweisen, die dazu bestimmt sind, ein durch die Eingangsleitung (VPE) übertragenes Paket infolge einer Zelladresse, die dazu bestimmt ist, ein Bit ("0") am Anfang eines Paketes abzuspeichern, und die von einer Leseadresse ($NB + (NO + 1)$), die durch die Leseeinrichtungen (BT) bezüglich einer vorhergehend gelesenen Zelle zum Schreiben des Pakets abgesetzt worden ist, abgeleitet ist und die vorzugsweise während des vorangegangenen Rasters der Multiplexleitung (MUXS) gelesen wird, zeitweilig zu speichern.

21. Einrichtungen zur Demultiplexierung nach Anspruch 20, dadurch gekennzeichnet, daß die Einrichtungen zum Aufstellen (52) einen ersten Speicher (521) zum Speichern derjenigen Zellenadressen in der Speichereinrichtung (50) aufweisen, die dazu bestimmt sind, die Bits des Anfangs der nächsten zu schreibenden und jeweils für die Ausgangskanäle ($CS_0$ bis $CS_{K-1}$) bestimmten Pakete zu speichern, und einen Zähler (520), der mit der Bit-Frequenz (w/2) der Eingangsleitung (VPE) erhöht wird und der von der Adresse derjenigen Zelle in dem ersten Speicher (521), die dazu bestimmt ist, das Bit eines Anfangs eines durch die Eingangsleitung (VPE) übertragenen Pakets infolge der Entdeckung des Paketanfangs (DBPE) zu speichern, beschickt wird, um nacheinander die Schreibadressen der Zellen, die das Paket speichern, aufzustellen, und Einrichtungen (523, 524) zum selektiven Schreiben einer von den Leseeinrichtungen (BT) gelieferten Zelladresse ($NB + (NO + 1)$) in den ersten Speicher (521) als Adresse der Zelle, die das Anfangsbit eines für einen Ausgangskanal bestimmten Pakets speichert, wobei die Adresse nach der im Lesen befindlichen Zelle bezüglich des Kanals gelesen werden muß, vorzugsweise nach der Dauer eines Rasters der Multiplexleitung (MUXS) ab dem Augenblick des Lesens der im Lesen befindlichen Zelle, wenn die Speichereinrichtungen (50) kein für den Kanal (PAP = 1) bestimmtes Paket enthalten, und zum Schreiben der Adresse der Zelle (520S), die das Ende des vorhergehend geschriebenen für den Kanal bestimmten Pakets gespeichert hat und die vom Zähler (520) geliefert worden ist, wenn das vorhergehend geschriebene Paket nicht vollständig gelesen worden ist (PAP = 0), aufweisen.

22. Einrichtungen zur Demultiplexierung nach Anspruch 20 oder 21, dadurch gekennzeichnet, daß die Einrichtungen zum Schreiben (52, 53, 6) zweite mit der Multiplexleitung (MUXS) verbundene Einrichtungen (6) zum Entdecken des Endes (FNPL) jedes in die Speichereinrichtungen (50) gelesenen und in der Multiplexleitung übertragenen Pakets und von den ersten und zweiten Einrichtungen zur Entdeckung (4, 6) gesteuerte Einrichtungen (53) zum Zählen und Abziehen der im Schreiben befindlichen, der komplett geschriebenen und der im Lesen in die Speichereinrichtungen (50) für jeden der Ausgangskanäle ($CS_0$ bis $CS_{K-1}$) befindlichen Kanäle, um die Adresse der Zelle auszuwählen, die dazu bestimmt ist, das Anfangsbit ("0") jedes Pakets zu speichern, aufweisen.

23. Einrichtungen zur Demultiplexierung nach Anspruch 22, dadurch gekennzeichnet, daß die Einrichtungen zum Zählen und Abziehen (53) einen zweiten Speicher (531) zum Speichern der Zahl der im Schreiben befindlichen Pakete, der vollständig geschriebenen und der für die Ausgangskanäle ($CS_0$ bis $CS_{K-1}$) im Lesen befindlichen Pakete zu speichern, Einrichtungen (533) zur Erhöhung und Verringerung der Paketzahl für einen Kanal um eine Einheit jeweils infolge des Anfangs (DBPE) eines Pakets des Kanals, das in die Speichereinrichtungen (50) geschrieben wurde und das durch die ersten Einrichtungen zur Entdeckung (4) angezeigt wurde, und infolge des Endes (FNPL) eines Pakets des Kanals, der in die Speichereinrichtungen (50) gelesen wurde, und das von den zweiten Einrichtungen zur Entdeckung (6) angezeigt wurde, aufweisen.

24. Einrichtungen zur Demultiplexierung nach Anspruch 21 und 23, dadurch gekennzeichnet, daß die Einrichtungen zum Zählen und Abziehen (53) Einrichtungen (536, 537, 538) aufweisen, um im ersten Speicher (521) und für jeden Ausgangskanal ($CS_0$ bis $CS_{K-1}$) das Lesen der Adresse der Zelle, die bestimmt ist, das Anfangsbit eines Pakets infolge der Entdeckung des Anfangs (DBPE = 1) dieses geschriebenen Pakets zu speichern, das Schreiben einer Zelladresse, die von den Leseeinrichtungen (BT) geliefert wurde, wobei die Zelle nach der bezüglich des Kanals im Lesen befindlichen Zelle gelesen werden muß, wenn die Zahl der Pakete des Kanals (PAP = 1) Null ist, und das Schreiben einer Zelladresse, die von dem Zähler (520) infolge der Entdeckung des Endes (FNPE = 1) eines geschriebenen Pakets des Kanals geliefert wurde, zu veranlassen.

25. Einrichtungen nach einem der Ansprüche 16 bis 24, dadurch gekennzeichnet, daß die Einrichtungen zum Trennen (DP) Einrichtungen (501 bis 504) zum systematischen Schreiben eines Bits mit einem vorbestimmten Zustand ("1") nach dem Lesen jeder Ein-Bit-Zelle in die Speichereinrichtungen ($50_0$ bis $50_{K-1}$) aufweisen, wobei das geschriebene Bit des vorbestimmten Zustands nur durch das vom Befehl (PPE) der ersten Einrichtungen zum Entdecken (2) verursachten Schreiben eines Bits des Pakets in diese Zelle gelöscht wird, um Bits mit einem vorgegebenen Zustand ("1") zwischen den gelesenen und in jeden der Kanäle ($CS_0$ bis $CS_{K-1}$) übertragenen Pakete zu übertragen.

26. Einrichtungen zur Demultiplexierung nach einem der Ansprüche 15 bis 25, dadurch gekennzeichnet, daß der Anfang und das Ende jedes Pakets in der Eingangsleitung (VPE) und in den Ausgangskanälen ($CS_0$ bis $CS_{K-1}$) von ersten und letzten Bits ("0") der Eingangs- und Schlußkennung ("01111110"), die die Daten des Pakets einrahmen, gebildet sind, und dadurch, daß jedes Paket mit seiner Eingangs- und Schlußkennung in der Trenneinrichtung (DP) geschrieben und gelesen wird.

27. Einrichtungen zur Demultiplexierung nach einem der Ansprüche 15 bis 26, dadurch gekennzeichnet, daß die Paketeingangsleitung (VPE) eine Rate aufweist, die gleich oder niedriger (DV = 256 kbit/s) als die Rate (D = 512 kbit/s) der Multiplexleitung (MUXS) ist.

FIG.1

FIG. 2

Paquet dans canal $CE_k$ (16 k bit/s)

Drapeau de fermeture

Données

Drapeau d'ouverture

MUXE (512 k bit/s)

$IT_{31}$   $IT_0$   $IT_k$   Trame 500 µs

FIG. 3

VPS, VPE (256 k bit/s)

drapeau de fermeture "0111110"

Données

paquet du canal $CE_k, CS_5$

Données

paquet du canal $CE_1, CS_{20}$

Données

paquet du canal $CE_{30}, CS_{20}$

drapeaux cadrés "0111110"

Données

paquet du canal $CE_k, CS_{k+2}$

drapeau d'ouverture "0111110"

# FIG. 4

## BASE DE TEMPS BT

# FIG.5

CIRCUIT DE DETECTION DE DEBUT ET FIN
DES PAQUETS DES CANAUX ENTRANTS 1

de CDF (FIG.4)
- adresse NCA 10A
- W=512kHz 10C

10E

MEMOIRE D'ETAT DE CANAL 32×8 bits — 10

10S

Etat suivant

Etat précèdent

11C

AUTOMATE DE DETECTION DE DEBUT ET FIN DE PAQUET — 11

11S

MUXE 11E

11F → FNP
11D → DBP

Vers 32,34 (FIG.6)

# FIG. 6

*CIRCUIT DE GESTION ET STOCKAGE DES PAQUETS DES CANAUX ENTRANTS 3*

*MEMOIRE K x (512 x 8) cellules à 1 bit*

*ADRESSES DES DEBUTS DES PAQUETS COMPLETEMENT ECRITS ET EN ATTENTE DE LECTURE*

*512 x 8 bits du canal $CE_O$* — $30_0$

*512 x 8 bits du canal $CE_k$* — $30_k$

*512 x 8 bits du canal $CE_{31}$* — $30_{31}$

*MUXE (512 k bit/s)* — 30D

Vers 21, 22 (FIG. 1)

30S

30C

30A

vers 20CH (FIG. 1)

PAT

de 21FD (FIG. 1)

de 11 (FIG. 5)

FMP

DBP — 34E — 34L — 32L — 32E

**34** — *MEMOIRE D'ADRESSE DE DEBUT DE PAQUET 32 x 12 bits* — 34S

34D — 34A

**32** — *FIFO 512 x 17 bits* — 32D — 32S

32ET — 33CH — 33H — 33E

**33** — *COMPTEUR D'ADRESSE DE LECTURE* — 33S — 31L

**31** — *MULTIPLEXEUR D'ADRESSES A 17 BITS* — 31SE — 31S — 31E

Vers 20E (FIG. 1)

NCA = NCE

NB + NO

NCA = NCE

W/2

W = 512 kHz

*de BT (FIG. 4)*

EP 0 275 743 B1

FIG.7

CIRCUIT DE COMPTAGE-DECOMPTAGE 535⁺ DE PAQUETS

CIRCUIT LOGIQUE DE COMMANDE

CIRCUIT A REGISTRE A DECALAGE

MEMOIRE DE NOMBRES DE PAQUET 32 × 8 bits

COMPARATEUR D'ADRESSES DE CANAL

MULTIPLEXEUR D'ADRESSES DE CANAL

COMPARATEUR à 8 bits

OU

MEMOIRE (K × 512 × 8) Cellules à 1 bit

512 × 8 bits; paquets et "1" pour CS₀

512 × 8 bits; paquets et "1" pour CS_k

512 × 8 bits; paquets et "1" pour CS₃₁

MULTIPLEXEUR D'ADRESSES A 17 bits

COMPTEUR D'ADRESSE D'ECRITURE

MEMOIRE D'ADRESSE DE "DEBUT" DE PAQUET A ECRIRE 32 × 12 bits

MULTIPLEXEUR D'ADRESSES

MULTIPLEXEUR D'ADRESSES DE CANAL

CIRCUIT D'ADRESSAGE EN ECRITURE

CIRCUIT DE GESTION ET STOCKAGE DES PAQUETS DE LA VOIE ENTRANTE 5

EP 0 275 743 B1